# EUROPEAN PATENT APPLICATION

(11) **EP 4 708 288 A1**
(43) Date of publication of application: **11.03.2026**
(21) Application number: 24800071.3
(22) Date of filing: 19.04.2024
(51) Int. Cl.: G10L 21/0272

(54) **INFORMATION PROCESSING DEVICE, SOUND SOURCE SEPARATION PROCESSING METHOD, AND PROGRAM**

(30) Priority: 01.05.2023 JP 2023075440
(71) Applicant: Sony Group Corporation, Tokyo 108-0075 (JP)
(72) Inventor: MATSUI, Takeshi, Tokyo 108-0075 (JP); KOYAMA, Yuichiro, Tokyo 108-0075 (JP); KASAHARA,Tomoharu, Tokyo 108-0075 (JP); YOSHIDA, Yuya, Tokyo 108-0075 (JP); SAGANO, Masayuki, Tokyo 108-0075 (JP)
(74) Representative: D Young & Co LLP
(86) International application number: PCT/JP2024/015606
(87) International publication number: WO 2024/228340

(57) **Abstract**

Provided are an apparatus and a method for executing sound source separation processing for extracting a plurality of different musical instrument sounds and the like using one learning model. The apparatus includes a sound source separation processing execution unit that executes sound source separation processing, and the sound source separation processing execution unit includes a configuration that executes sound source separation processing using a learning model, and executes processing of extracting a plurality of different types of musical instrument sounds using a same learning model. The sound source separation processing execution unit includes three types of learning models including (a) a learning model that extracts a vocal sound (singing sound) and a voice sound (conversation sound), (b) a learning model that extracts a guitar sound and a piano sound, and (c) a learning model that extracts a noise sound.

## Description

### TECHNICAL FIELD

The present disclosure relates to an information processing apparatus, a sound source separation processing method, and a program. More specifically, the present disclosure relates to an information processing apparatus that executes sound source separation processing, a sound source separation processing method, and a program.

### BACKGROUND ART

For example, sound source separation processing is known as processing of separating audio data including a large number of different musical instrument sounds such as orchestras into audio data in units of sound sources corresponding to the type of musical instrument such as only violin sound or only trumpet sound.

With recent evolution of artificial intelligence (AI) technology, it has become possible to perform sound source separation processing using a learning model such as a neural network, for example, a deep neural network (DNN).

As a conventional technique that discloses sound source separation processing using DNN, for example, there is Patent Document 1 (WO 2023/276235 A).

However, in the configuration in which the sound source separation processing is executed using a neural network such as a DNN, it is necessary to generate a neural network unique to a sound source corresponding to a type of a sound source to be separated, for example, a human voice, a guitar, a piano, a violin, or the like.

For example, in order to separate only human voice from audio data in which sounds of various sound sources are mixed, it is necessary to generate and use a neural network in which unique parameters specialized for human voice are set.

Similarly, in order to separate only the sound of the guitar from the audio data in which the sounds of various sound sources are mixed, it is necessary to generate and use a neural network in which unique parameters specialized for the sound of the guitar are set.

In a case where the sound source separation processing is executed using a neural network such as a DNN as described above, it is necessary to generate a neural network unique to a sound source according to a type of a sound source to be separated.

However, in order to generate a learning model unique to a sound source, such as a neural network unique to a sound source according to a sound source type, learning processing using a lot of learning data is required. That is, it is necessary to perform learning processing by inputting various different pieces of audio data as learning data to a DNN or the like, and to perform calculation processing of a separation parameter specialized for a type of a sound source to be separated.

Therefore, if the number of sound source types to be separated increases, the number of learning processing required according to the number of sound source types also increases, and a problem that the learning processing cost becomes enormous occurs.

The parameters unique to the sound source are associated with the learning model such as the neural network unique to the sound source generated by the learning processing.

Since the amount of data such as parameters associated with the learning model unique to these sound sources also increases in proportion to the number of sound sources to be separated, the memory capacity for storing these data also increases.

Therefore, for example, there is a possibility that learning models and parameters corresponding to many sound sources cannot be recorded in a small device having a small memory capacity, and in this case, there is also a problem that it is difficult to separate various sound sources in the small device.

### CITATION LIST

### PATENT DOCUMENT

Patent Document 1: WO 2023/276235 A

### SUMMARY OF THE INVENTION

### PROBLEMS TO BE SOLVED BY THE INVENTION

The present disclosure has been made in view of the above problems, for example, and an object of the present disclosure is to provide an information processing apparatus, a sound source separation processing method, and a program capable of reducing a learning cost and reducing a storage memory capacity of a learning model, a parameter, and the like in a configuration for executing sound source separation processing using a learning model such as a DNN.

### SOLUTIONS TO PROBLEMS

A first aspect of the present disclosure is
an information processing apparatus
including a sound source separation processing execution unit that executes sound source separation processing, in which
the sound source separation processing execution unit
includes a configuration that executes sound source separation processing using a learning model, and
executes processing of extracting a plurality of different types of musical instrument sounds using a same learning model.

Further, a second aspect of the present disclosure is
a sound source separation processing method executed in an information processing apparatus, in which
the information processing apparatus includes a sound source separation processing execution unit that executes sound source separation processing, and
the sound source separation processing execution unit is configured to
execute processing of extracting a plurality of different types of musical instrument sounds using a same learning model.

Further, a third aspect of the present disclosure is
a program that causes an information processing apparatus to execute sound source separation processing, in which
the information processing apparatus includes a sound source separation processing execution unit that executes sound source separation processing, and
the program causes the sound source separation processing execution unit to execute
processing of extracting a plurality of different types of musical instrument sounds using a same learning model.

Note that the program of the present disclosure is, for example, a program that can be provided by a storage medium or a communication medium provided in a computer-readable format to an information processing apparatus or a computer system capable of executing various program codes. By providing such a program in a computer-readable format, processing according to the program is realized on the information processing apparatus or the computer system.

Still other objects, features, and advantages of the present disclosure will become apparent from more detailed description based on examples of the present disclosure described later and the accompanying drawings. Note that, in the present specification, a system is a logical set configuration of a plurality of apparatuses, and is not limited to a system in which apparatuses of respective configurations are in the same housing.

According to a configuration of an example of the present disclosure, a configuration for executing sound source separation processing for extracting a plurality of different musical instrument sounds and the like using one learning model is realized.

Specifically, for example, a sound source separation processing execution unit that executes sound source separation processing is included, and the sound source separation processing execution unit has a configuration that executes sound source separation processing using a learning model and executes processing of extracting a plurality of different types of musical instrument sounds using the same learning model. The sound source separation processing execution unit includes three types of learning models including (a) a learning model that extracts a vocal sound (singing sound) and a voice sound (conversation sound), (b) a learning model that extracts a guitar sound and a piano sound, and (c) a learning model that extracts a noise sound.

With these configurations, a configuration for executing sound source separation processing for extracting a plurality of different musical instrument sounds and the like using one learning model is realized.

Note that the effects described in the present specification are merely examples and are not limited, and additional effects may be provided.

### BRIEF DESCRIPTION OF DRAWINGS

Fig. 1 is a diagram for explaining an example of sound source separation processing.
Fig. 2 is a diagram for explaining a specific configuration example of a sound source separation processing execution unit and specific processing executed by the sound source separation processing execution unit.
Fig. 3 is a diagram for explaining a specific example of generation processing of a learning model (DNN) unique to a sound source.
Fig. 4 is a diagram for explaining a configuration example of learning data including a pair of input data and correct answer data.
Fig. 5 is a diagram for explaining learning processing for generating a guitar sound separation unit (DNN for guitar sound separation) in the sound source separation processing execution unit illustrated in Fig. 2.
Fig. 6 is a diagram for explaining a configuration example of learning data including a pair of input data and correct answer data.
Fig. 7 is a diagram for explaining a configuration example of separating a vocal sound and a piano sound.
Fig. 8 is a diagram for explaining a specific configuration example of a sound source separation processing execution unit and specific processing executed by the sound source separation processing execution unit.
Fig. 9 is a diagram for explaining learning processing for generating a piano sound separation unit (DNN for piano sound separation).
Fig. 10 is a diagram for explaining a configuration example of learning data including a pair of input data and correct answer data.
Fig. 11 is a diagram for explaining a specific configuration example of a sound source separation processing execution unit that performs separation processing of input data in which sounds of three or more sound sources are recorded and specific processing to be executed.
Fig. 12 is a diagram for explaining a configuration and processing of executing processing of extracting and separating a noise sound in addition to processing of separating a vocal sound, a guitar sound, and a piano sound from input data.
Fig. 13 is a diagram for explaining an example of learning data necessary for generating four neural networks constituting the four sound source separation units illustrated in Fig. 12.
Fig. 14 is a diagram for explaining an example of sound source separation processing using the information processing apparatus of the present disclosure.
Fig. 15 is a diagram for explaining an example of a UI that instructs start of sound source separation processing.
Fig. 16 is a diagram for explaining an example of a UI of an editing screen displayed on a display unit of the information processing apparatus.
Fig. 17 is a block diagram illustrating a configuration example of an information processing apparatus of the present disclosure.
Fig. 18 is a diagram for explaining types of audio data (recorded data) to be subjected to the sound source separation processing executed by the information processing apparatus of the present disclosure.
Fig. 19 is a diagram for explaining sound source separation processing of three types of sound source data executed by the information processing apparatus of the present disclosure.
Fig. 20 is a diagram for explaining a configuration example of a sound source separation processing execution unit of the information processing apparatus of the present disclosure and processing to be executed.
Fig. 21 is a diagram for explaining an example of learning data used for learning processing (supervised learning) for generating three types of learning models (DNN) used by a sound source separation processing execution unit of the information processing apparatus of the present disclosure.
Fig. 22 is a diagram for explaining learning processing for generating a vocal and voice sound separation unit (DNN for vocal and voice sound separation) that extracts a vocal sound (singing sound) or a voice sound (conversation sound) from input data.
Fig. 23 is a diagram for explaining learning processing for generating a guitar and piano sound separation unit (DNN for guitar and piano sound separation) that extracts a guitar sound and a piano sound from input data.
Fig. 24 is a diagram for explaining learning processing for generating a noise sound separation unit (DNN for noise sound separation) that extracts a noise sound from input data.
Fig. 25 is a diagram illustrating a flowchart for explaining a sequence of sound source separation processing executed by the information processing apparatus of the present disclosure.
Fig. 26 is a diagram for explaining an example of a UI that instructs start of sound source separation processing.
Fig. 27 is a diagram for explaining an example of a UI that instructs start of sound source separation processing.
Fig. 28 is a diagram for explaining an example of a UI that instructs start of sound source separation processing.
Fig. 29 is a diagram for explaining a start instruction example of the sound source separation processing using the UI that instructs the start of the sound source separation processing.
Fig. 30 is a diagram for explaining a processing mode of sound source separation processing executed by a sound source separation processing execution unit of the information processing apparatus.
Fig. 31 is a diagram for explaining a start instruction example of the sound source separation processing using the UI that instructs the start of the sound source separation processing.
Fig. 32 is a diagram for explaining a processing mode of sound source separation processing executed by a sound source separation processing execution unit of the information processing apparatus.
Fig. 33 is a diagram for explaining an example of display data for reproduction processing or editing processing of audio data in units of sound sources.
Fig. 34 is a diagram for explaining an example of a system that executes sound source separation processing using an external device.
Fig. 35 is a diagram for explaining a configuration example of each apparatus of a system that executes sound source separation processing using an external device.
Fig. 36 is a diagram for explaining a hardware configuration example of the information processing apparatus of the present disclosure.

### MODE FOR CARRYING OUT THE INVENTION

Hereinafter, details of an information processing apparatus, a sound source separation processing method, and a program of the present disclosure will be described with reference to the drawings. Note that the description will be made according to the following items.
1. General Configuration Example of Sound Source Separation Processing Using Learning Model
2. Overview of Sound Source Separation Processing Using Information Processing Apparatus of Present Disclosure
3. Configuration Example of Information Processing Apparatus of Present Disclosure
4. Details of Sound Source Separation Processing Executed by Information Processing Apparatus of Present Disclosure
5. Sequence of Sound Source Separation Processing Executed by Information Processing Apparatus of Present Disclosure
6. Configuration Example in Which Sound Source Separation Processing Is Executed in External Device
7. Hardware Configuration Example of Information Processing Apparatus of Present Disclosure
8. Summary of Configuration of Present Disclosure

### [1. General Configuration Example of Sound Source Separation Processing Using Learning Model]

First, a general configuration example of sound source separation processing using a learning model will be described.

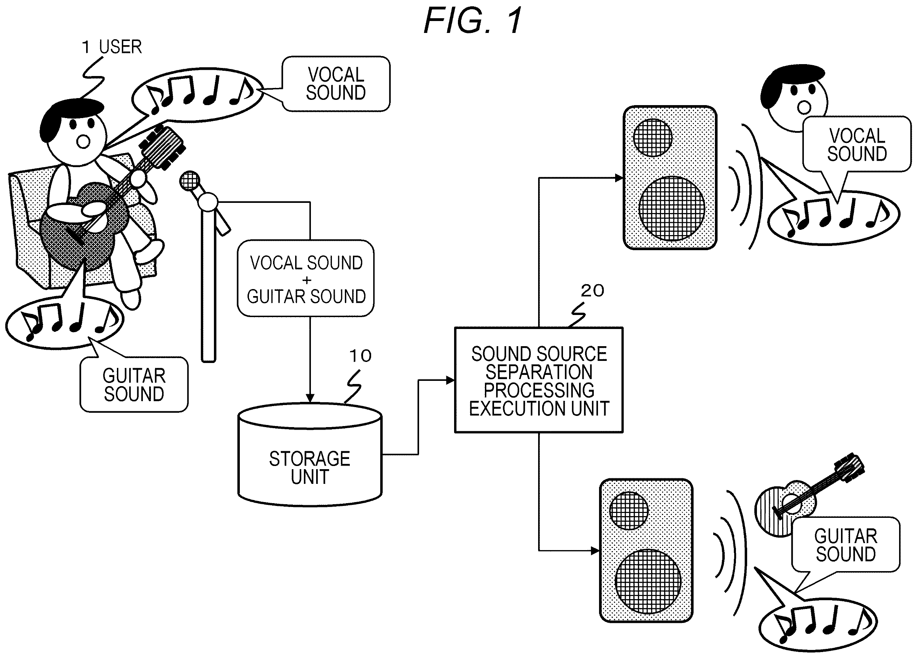

An example of general sound source separation processing will be described with reference to Fig. 1.

Fig. 1 illustrates a user 1 who sings a song while playing a guitar. The vocal sound of the user 1 and the guitar sound that is the playing sound of the guitar are input via the microphone and recorded in the storage unit 10 as an audio data file.

The audio data file recorded in the storage unit 10 is an audio data file in which the vocal sound of the user 1 and the guitar sound that is the playing sound of the guitar are mixed.

The sound source separation processing execution unit 20 reads the audio data stored in the storage unit 10 and executes the sound source separation processing. That is, a process of extracting only the vocal sound and a process of extracting only the guitar sound from the audio data in which the vocal sound uttered by the user 1 and the guitar sound are mixed are executed.

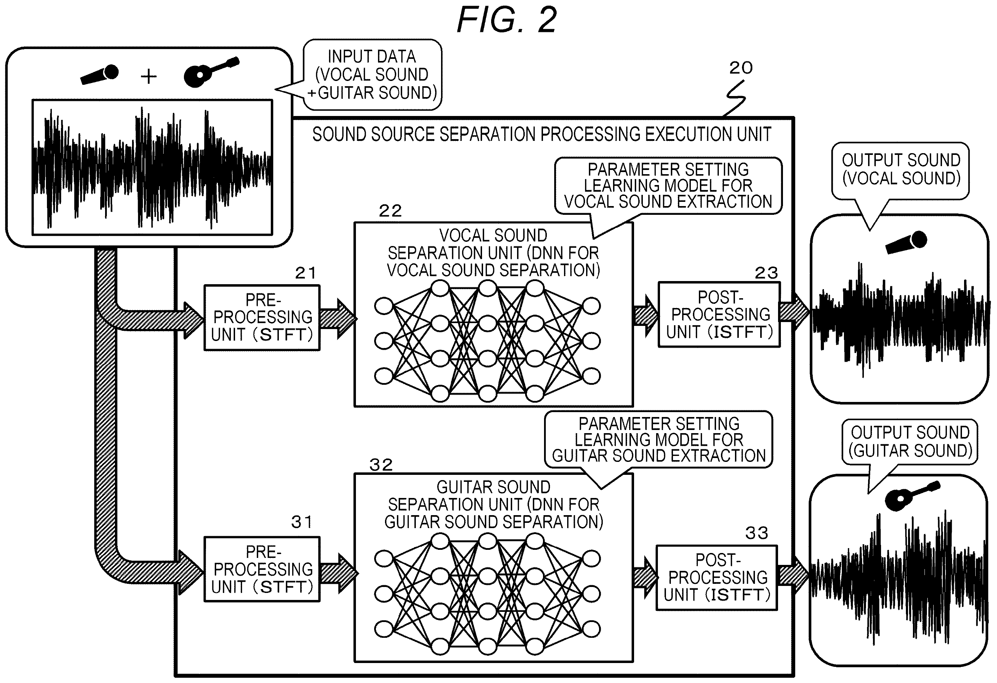

A specific configuration example of the sound source separation processing execution unit 20 and specific processing executed by the sound source separation processing execution unit 20 will be described with reference to Fig. 2.

The sound source separation processing execution unit 20 inputs the input data illustrated in the upper left of Fig. 2 from the storage unit 10.

The input data is audio data in which a vocal sound uttered by the user 1 and a guitar sound are mixed, and is audio data that changes along a time axis.

The sound source separation processing execution unit 20 inputs audio data in which the vocal sound and the guitar sound are mixed, and executes processing of extracting only the vocal sound and processing of extracting only the guitar sound.

The sound source separation processing execution unit 20 performs sound source separation processing using a learning model including a neural network, for example, a neural network such as a deep neural network (DNN).

As illustrated in Fig. 2, the sound source separation processing execution unit 20 includes:
a series of data processing units including a pre-processing unit (STFT) 21, a vocal sound separation unit (DNN for vocal sound separation) 22, and a post-processing unit (ISTFT) 23; and
a series of data processing units including a pre-processing unit (STFT) 31, a guitar sound separation unit (DNN for guitar sound separation) 32, and a post-processing unit (ISTFT) 33.

Vocal sounds included in the input data are extracted by the configurations of a pre-processing unit (STFT) 21, a vocal sound separation unit (DNN for vocal sound separation) 22, and a post-processing unit (ISTFT) 23 illustrated in the upper part.

Meanwhile, the guitar sound included in the input data is extracted by the configurations of the pre-processing unit (STFT) 31, the guitar sound separation unit (DNN for guitar sound separation) 32, and the post-processing unit (ISTFT) 33 illustrated in the lower part.

The pre-processing unit (STFT) 21 illustrated in the upper part executes short-time Fourier trasform (STFT) on the input data.

Through this STFT processing, input data that is data in a time domain in which an audio signal changes along a time axis is converted into data in a frequency domain (frequency spectrum).

This conversion data is input to a vocal sound separation unit (DNN for vocal sound separation) 22.

The vocal sound separation unit (DNN for vocal sound separation) 22 is a sound source separation unit configured using a neural network, specifically, a learning model such as deep neural network (DNN), for example.

The vocal sound separation unit (DNN for vocal sound separation) 22 is a neural network (learning model) that extracts sound data having a feature amount (frequency or the like) of a vocal sound corresponding to human voice from audio data of various sound sources included in input data.

This neural network (learning model) is a neural network (learning model) that is generated by learning processing executed in advance and in which parameters for extracting sound data having a feature amount of a vocal sound corresponding to human voice are set.

The vocal sound separation unit (DNN for vocal sound separation) 22 extracts audio data corresponding to a vocal sound corresponding to human voice from audio data of various sound sources included in the input data.

The audio data extracted by the vocal sound separation unit (DNN for vocal sound separation) 22 is input to the post-processing unit (ISTFT) 23.

The post-processing unit (ISTFT) 23 executes reverse processing of the pre-processing unit (STFT) 21 described above. That is, inverse short-time Fourier trasform (ISTFT) is executed.

By this ISTFT processing, data in the frequency domain (frequency spectrum) is converted into data in the time domain in which the audio signal changes along the original time axis.

The output of the post-processing unit (ISTFT) 23 is audio data extracted by the vocal sound separation unit (DNN for vocal sound separation) 22, that is, audio data of the vocal sound.

Meanwhile, the pre-processing unit (STFT) 31 illustrated in the lower part also executes short-time Fourier trasform (STFT) on the input data to convert the input data, which is the data in the time domain, into data in the frequency domain (frequency spectrum).

This conversion data is input to the guitar sound separation unit (DNN for guitar sound separation) 32.

The guitar sound separation unit (DNN for guitar sound separation) 32 is also a sound source separation unit configured using a neural network, specifically, a learning model such as deep neural network (DNN), for example.

The guitar sound separation unit (DNN for guitar sound separation) 32 is a neural network (learning model) that extracts sound data having a feature amount (frequency or the like) of the sound of the guitar from the audio data of various sound sources included in the input data.

This neural network (learning model) is also a neural network (learning model) generated by learning processing executed in advance and in which parameters for extracting sound data having the feature amount of the guitar sound are set.

In the guitar sound separation unit (DNN for guitar sound separation) 32, audio data corresponding to the sound of the guitar is extracted from the audio data of various sound sources included in the input data.

The audio data extracted by the guitar sound separation unit (DNN for guitar sound separation) 32 is input to the post-processing unit (ISTFT) 33.

The post-processing unit (ISTFT) 33 executes reverse processing of the pre-processing unit (STFT) 31. That is, inverse short-time Fourier trasform (ISTFT) is executed.

By this ISTFT processing, data in the frequency domain (frequency spectrum) is converted into data in the time domain in which the audio signal changes along the original time axis.

The output of the post-processing unit (ISTFT) 33 is the audio data extracted by the guitar sound separation unit (DNN for guitar sound separation) 32, that is, the audio data of the guitar sound.

As described above, in the configuration in which the sound source separation processing is executed using the neural network such as the DNN, the neural network unique to the sound source corresponding to the type of the sound source to be separated, for example, the type of the sound source to be separated, such as human voice, guitar, piano, and violin, is used.

That is, a neural network in which parameters unique to sound sources to be separated are set is used.

In order to generate a learning model unique to a sound source such as a neural network unique to a sound source according to such a sound source type, learning processing using a large amount of learning data is required. That is, it is necessary to perform learning processing by inputting various different pieces of audio data as learning data to a DNN or the like.

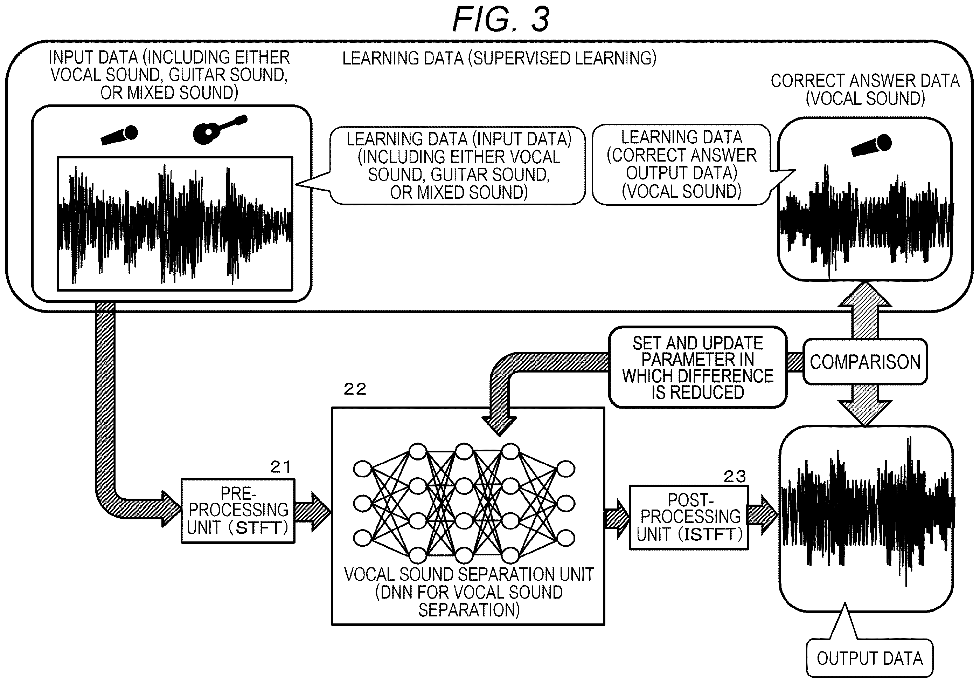

A specific example of processing of generating a learning model (DNN) unique to a sound source will be described with reference to Fig. 3.

The example illustrated in Fig. 3 is a diagram for explaining learning processing for generating a vocal sound separation unit (DNN for vocal sound separation) 22 for extracting a vocal sound corresponding to human voice from input data.

The learning processing illustrated in Fig. 3 is supervised learning processing.

That is, learning processing is performed using a data set of a large number of "input data" including mixed data of various sound source data and "correct answer data" that is extraction data of vocal sound data included in each input data.

In the supervised learning processing, as described above, correct answer data for input data is prepared in advance, the input data is input to the vocal sound separation unit (DNN for vocal sound separation) 22 via the pre-processing unit (STFT) 21, and a separation processing result in the vocal sound separation unit (DNN for vocal sound separation) 22 is output via the post-processing unit (ISTFT) 23 to obtain "output data".

The "output data" is compared with the "correct answer data", and processing of setting and updating the parameters of the neural network constituting the vocal sound separation unit (DNN for vocal sound separation) 22 is executed so that the difference between the two data becomes small.

A large number of pieces of learning data including pairs of "input data" and "correct answer data" are prepared.

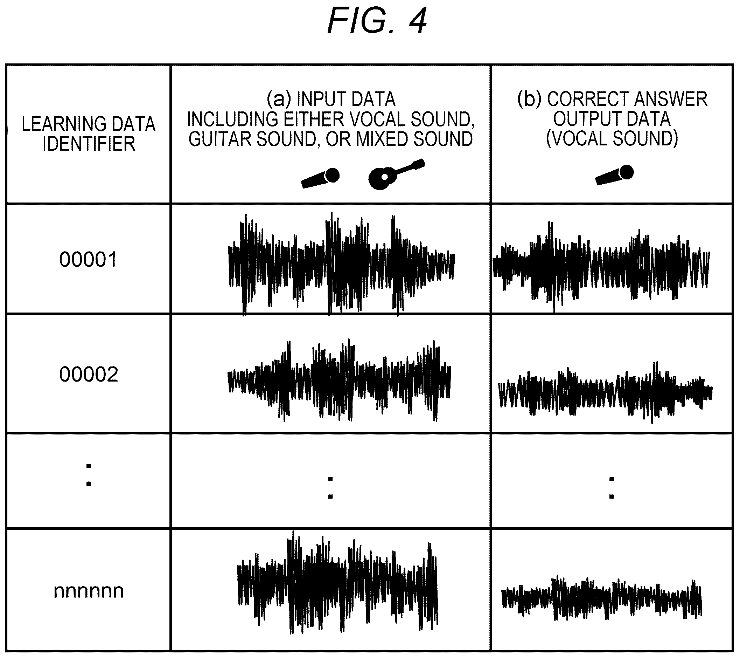

For example, as illustrated in Fig. 4, it is necessary to generate in advance learning data including a large number of different pairs of "input data" and "correct answer data" from the learning data identifiers 00001 to nnnnn, that is, a combination of "input data" including mixed data of various sound sources and "correct answer data" including only a vocal sound included in the input data.

The large number of pieces of input data are sequentially input to the vocal sound separation unit (DNN for vocal sound separation) 22, and the parameters of the neural network constituting the vocal sound separation unit (DNN for vocal sound separation) 22 are sequentially updated so that the difference between the "output data" and the "correct answer data" becomes small.

By repeating this processing, the separation performance of the vocal sound separation unit (DNN for vocal sound separation) 22 can be gradually improved.

When the separation performance at the preset allowable level is obtained, the learning processing can be ended.

By performing such learning processing, one neural network in the sound source separation processing execution unit 20 illustrated in Fig. 2, that is, the vocal sound separation unit (DNN for vocal sound separation) 22 can be generated.

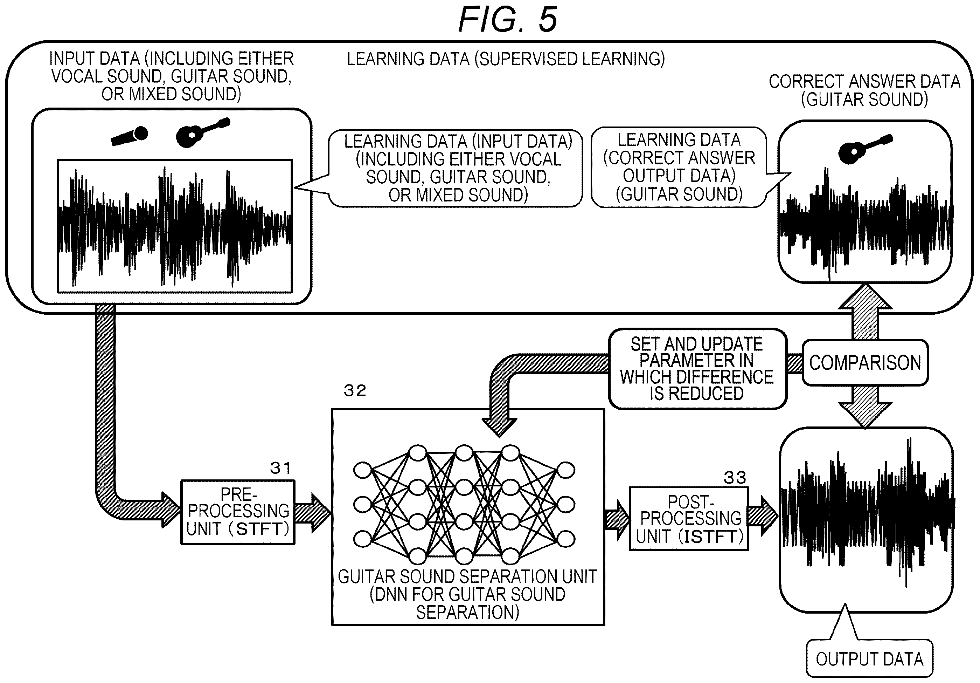

Fig. 5 is a diagram for explaining learning processing for generating another neural network in the sound source separation processing execution unit 20 illustrated in Fig. 2, that is, the guitar sound separation unit (DNN for guitar sound separation) 32.

The learning processing illustrated in Fig. 5 is also supervised learning processing. Supervised learning processing is performed using a data set of a large number of "input data" including mixed data of various sound source data and "correct answer data" obtained by extracting only the guitar sound from each input data.

Also in this case, it is necessary to prepare a large number of pieces of learning data including a pair of "input data" and "correct answer data".

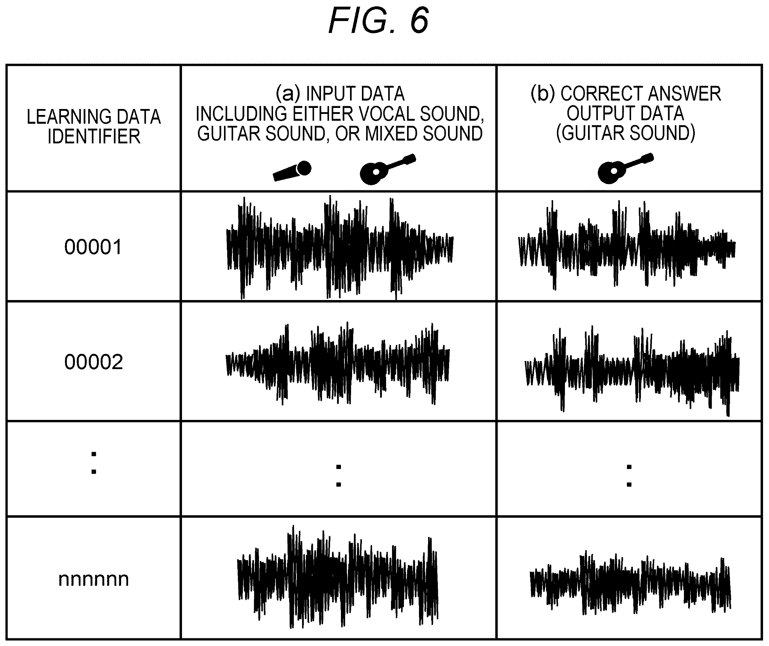

For example, as illustrated in Fig. 6, it is necessary to generate in advance learning data including a large number of different pairs of "input data" and "correct answer data" from the learning data identifiers 00001 to nnnnn, that is, a combination of "input data" including mixed data of various sound sources and "correct answer data" including only the guitar sound included in the input data.

The large number of pieces of input data are sequentially input to the guitar sound separation unit (DNN for guitar sound separation) 32 via the pre-processing unit (STFT) 31 illustrated in Fig. 5, the "output data" output from the post-processing unit (ISTFT) 33 is compared with the "correct answer data", and the parameters of the neural network constituting the guitar sound separation unit (DNN for guitar sound separation) 32 are sequentially updated so that the difference between the "output data" and the "correct answer data" becomes small.

By repeating this processing, the separation performance of the guitar sound separation unit (DNN for guitar sound separation) 32 can be gradually improved.

When the separation performance at the preset allowable level is obtained, the learning processing can be ended.

By performing such learning processing, another neural network in the sound source separation processing execution unit 20 illustrated in Fig. 2, that is, the guitar sound separation unit (DNN for guitar sound separation) 32 can be generated.

As described above, the neural network configured in the sound source separation processing execution unit 20 is generated as a neural network unique to the sound source in which the parameters unique to the sound source in units of sound sources are set.

In order to separate the vocal sound and the guitar sound, the sound source separation processing execution unit 20 illustrated in Fig. 2 needs to generate a vocal sound separation unit (DNN for vocal sound separation) 22 which is a neural network dedicated to the vocal sound separation processing and a guitar sound separation unit (DNN for guitar sound separation) 32 which is a neural network dedicated to the guitar sound separation processing.

For these neural network generation processing, it is necessary to prepare a large number of teacher data sets each including "input data" and "correct answer data", and sequentially input the prepared teacher data sets to the neural network to set and update parameters.

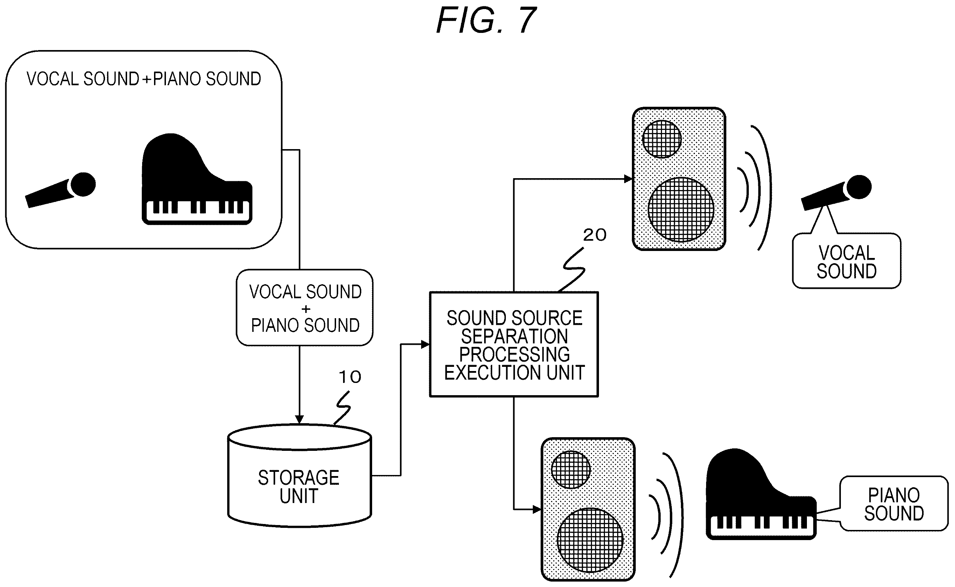

For example, the configuration in which the vocal sound and the piano sound are separated from each other instead of the combination of the vocal sound and the guitar sound has a configuration as illustrated in Fig. 7.

Fig. 7 is a diagram for explaining a processing example of sound source separation processing for recorded data in a case where the user is singing a song while playing the piano.

The vocal sound of the user and the piano sound that is the playing sound of the piano are input via the microphone and recorded in the storage unit 10 as an audio data file.

The audio data file stored in the storage unit 10 is a recording file of audio data in which the vocal sound of the user and the piano sound that is the playing sound of the piano are mixed.

The sound source separation processing execution unit 20 reads the audio data stored in the storage unit 10 and executes the sound source separation processing. That is, processing of extracting only the vocal sound and processing of extracting only the piano sound from the audio data in which the vocal sound of the user and the piano sound are mixed are executed.

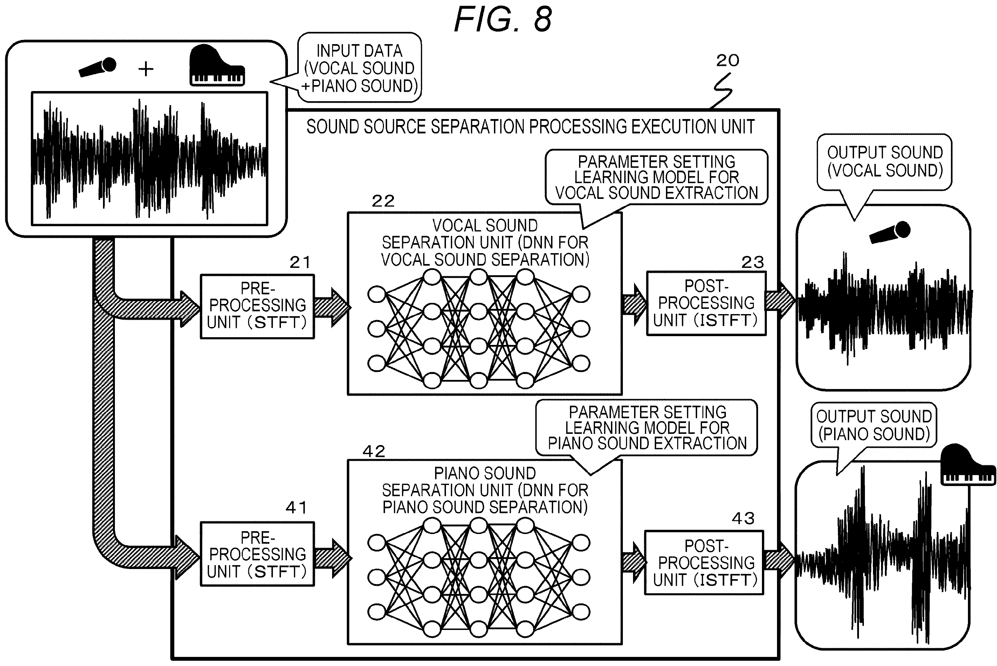

Fig. 8 describes a specific configuration example of the sound source separation processing execution unit 20 and specific processing executed by the sound source separation processing execution unit 20.

The sound source separation processing execution unit 20 inputs the input data illustrated in the upper left of Fig. 8 from the storage unit 10.

The input data is audio data in which a vocal sound of the user and a piano sound are mixed, and is audio data that changes along a time axis.

The sound source separation processing execution unit 20 inputs audio data in which the vocal sound and the piano sound are mixed, and executes processing of extracting only the vocal sound and processing of extracting only the piano sound.

Similarly to the configuration described above with reference to Fig. 2, the sound source separation processing execution unit 20 performs the sound source separation processing using a learning model including a neural network, for example, a neural network such as a deep neural network (DNN).

In the example illustrated in Fig. 8,
vocal sounds included in the input data are extracted by the configurations of a pre-processing unit (STFT) 21, a vocal sound separation unit (DNN for vocal sound separation) 22, and a post-processing unit (ISTFT) 23 illustrated in the upper part.

Meanwhile, the piano sound included in the input data is extracted by the configurations of the pre-processing unit (STFT) 41, the piano sound separation unit (DNN for piano sound separation) 42, and the post-processing unit (ISTFT) 43 illustrated in the lower part.

The configurations of the pre-processing unit (STFT) 21, the vocal sound separation unit (DNN for vocal sound separation) 22, and the post-processing unit (ISTFT) 23 illustrated in the upper part are similar to the configurations described above with reference to Fig. 2.

Meanwhile, among the pre-processing unit (STFT) 41, the piano sound separation unit (DNN for piano sound separation) 42, and the post-processing unit (ISTFT) 43 illustrated in the lower part, the piano sound separation unit (DNN for piano sound separation) 42 is a neural network (learning model) that extracts sound data having a feature amount of the piano sound from the audio data of various sound sources included in the input data.

This neural network (learning model) is also a neural network (learning model) which is generated by learning processing executed in advance and in which parameters for extracting sound data having a feature amount (frequency or the like) of the piano sound are set.

In the piano sound separation unit (DNN for piano sound separation) 42, audio data corresponding to the sound of the piano is extracted from the audio data of various sound sources included in the input data.

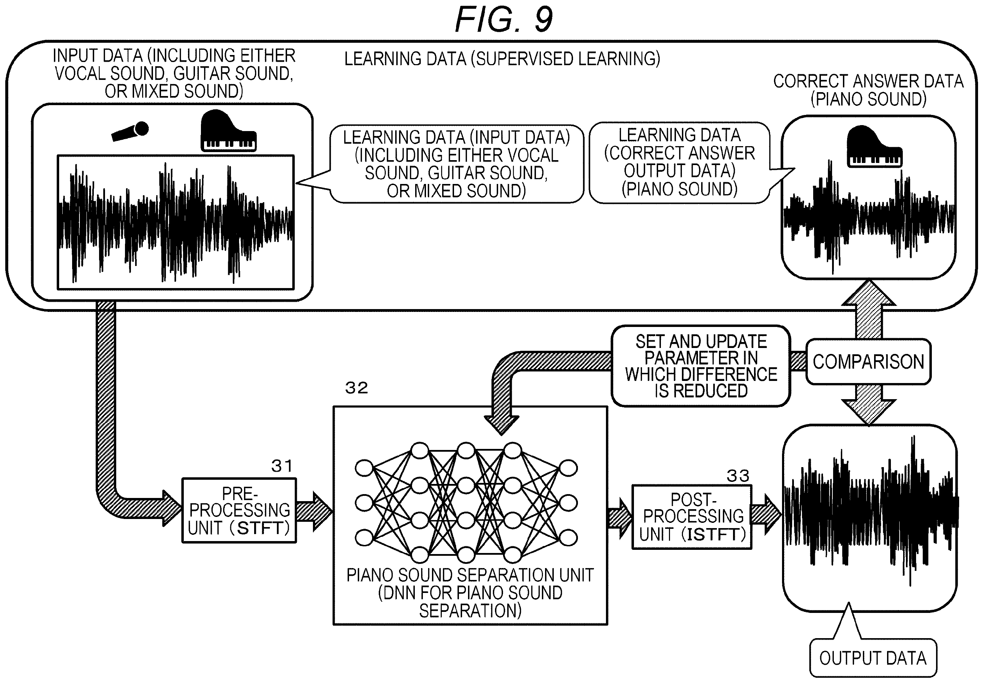

Learning processing for generating the piano sound separation unit (DNN for piano sound separation) 42 will be described with reference to Fig. 9.

The learning processing illustrated in Fig. 9 is also the supervised learning processing described above. Supervised learning processing is performed using data sets of a large number of "input data" including mixed data of various sound source data and "correct answer data" obtained by extracting only the piano sound from each input data.

Also in this case, it is necessary to prepare a large number of pieces of learning data including a pair of "input data" and "correct answer data".

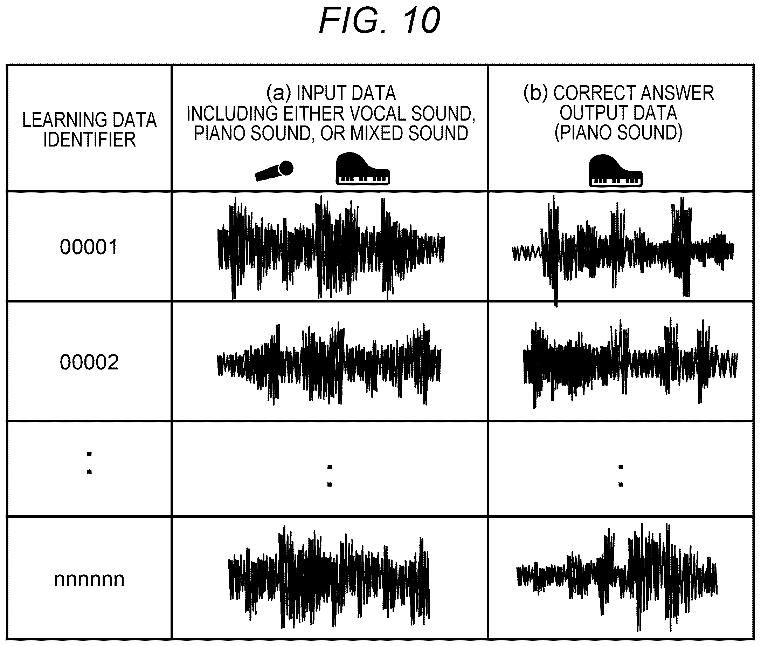

For example, as illustrated in Fig. 10, it is necessary to generate in advance learning data including a large number of different pairs of "input data" and "correct answer data" from the learning data identifiers 00001 to nnnnn, that is, a combination of "input data" including mixed data of various sound sources and "correct answer data" including only the piano sound included in the input data.

The large number of pieces of input data are sequentially input to the piano sound separation unit (DNN for piano sound separation) 42 via the pre-processing unit (STFT) 41 illustrated in Fig. 9, the "output data" output from the post-processing unit (ISTFT) 43 is compared with the "correct answer data", and the parameters of the neural network constituting the piano sound separation unit (DNN for piano sound separation) 42 are sequentially updated so that the difference between the "output data" and the "correct answer data" becomes small.

By repeating this processing, the separation performance of the piano sound separation unit (DNN for piano sound separation) 32 can be gradually improved.

When the separation performance at the preset allowable level is obtained, the learning processing can be ended.

By performing such learning processing, the neural network in the sound source separation processing execution unit 20 illustrated in Fig. 8, that is, the piano sound separation unit (DNN for piano sound separation) 42 can be generated.

As described above, the neural network configured in the sound source separation processing execution unit 20 needs to be generated as a neural network unique to the sound source in which the parameters unique to the sound source in units of sound sources are set.

Note that the sound source separation processing described so far is an example of the separation processing of the input data in which the sounds of the two sound sources are recorded, that is, the separation processing of the input data in which the vocal sound and the guitar sound are recorded, and the separation processing of the input data in which the vocal sound and the piano sound are recorded.

In a case where three or more sound sources are included in the input data, it is necessary to generate a neural network unique to each of the three or more sound sources.

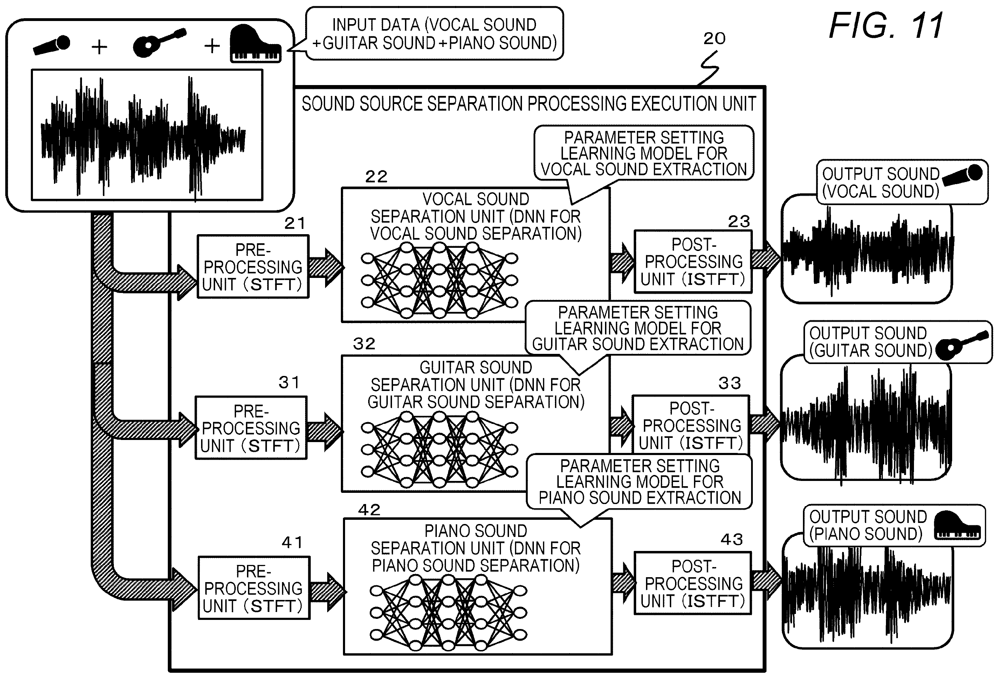

A configuration example of the sound source separation processing execution unit 20 that performs separation processing of input data in which sounds of three or more sound sources are recorded will be described with reference to Fig. 11 and subsequent drawings.

Fig. 11 is a diagram for explaining a specific configuration example of the sound source separation processing execution unit 20 that performs separation processing of input data in which sounds of three or more sound sources are recorded and specific processing executed by the sound source separation processing execution unit 20.

The sound source separation processing execution unit 20 reads the audio data stored in the storage unit 10 and executes the sound source separation processing.

In the example illustrated in Fig. 11, the sound source separation processing execution unit 20 inputs the input data illustrated in the upper left of Fig. 11 from the storage unit 10.

The input data is audio data in which a vocal sound of the user, a guitar sound, and a piano sound are mixed, and is audio data that changes along a time axis.

The sound source separation processing execution unit 20 illustrated in Fig. 11 inputs any one of a vocal sound, a guitar sound, and a piano sound, or audio data in which a mixed sound thereof is recorded, and executes processing of extracting the vocal sound from the input data, processing of extracting the guitar sound, and processing of extracting the piano sound.

The sound source separation processing execution unit 20 uses a neural network unique to each sound source, for example, a deep neural network (DNN) for separation processing of each sound source.

In the example illustrated in Fig. 11, the vocal sound included in the input data is extracted with the configurations of a pre-processing unit (STFT) 21, a vocal sound separation unit (DNN for vocal sound separation) 22, and a post-processing unit (ISTFT) 23 illustrated in the upper part.

In addition, the guitar sound included in the input data is extracted by the configurations of the pre-processing unit (STFT) 31, the guitar sound separation unit (DNN for guitar sound separation) 32, and the post-processing unit (ISTFT) 33 illustrated in the middle part.

Further, the piano sound included in the input data is extracted by the configurations of the pre-processing unit (STFT) 41, the piano sound separation unit (DNN for piano sound separation) 42, and the post-processing unit (ISTFT) 43 illustrated in the lower part.

The upper vocal sound separation unit (DNN for vocal sound separation) 22 is a neural network (learning model) that extracts sound data having a feature amount of a vocal sound from audio data of various sound sources included in input data. That is, the neural network is a neural network unique to the vocal sound in which parameters unique to the vocal sound specialized for the vocal sound extraction are set.

The guitar sound separation unit (DNN for guitar sound separation) 32 in the middle stage is a neural network (learning model) that extracts sound data having the feature amount of the guitar sound from the audio data of various sound sources included in the input data. That is, the neural network is a neural network unique to the guitar sound in which parameters unique to the guitar sound specialized for the guitar sound extraction are set.

The lower piano sound separation unit (DNN for piano sound separation) 42 is a neural network (learning model) that extracts sound data having a feature amount of the piano sound from the audio data of various sound sources included in the input data. That is, the neural network is a neural network unique to the piano sound in which parameters unique to the piano sound specialized for the piano sound extraction are set.

As described above, in order to generate the vocal sound separation unit (DNN for vocal sound separation) 22, the guitar sound separation unit (DNN for guitar sound separation) 32, and the piano sound separation unit (DNN for piano sound separation) 42, learning processing using learning data for generating respective neural networks is required.

Furthermore, there is also a separation processing configuration in which noise included in input data is taken into consideration.

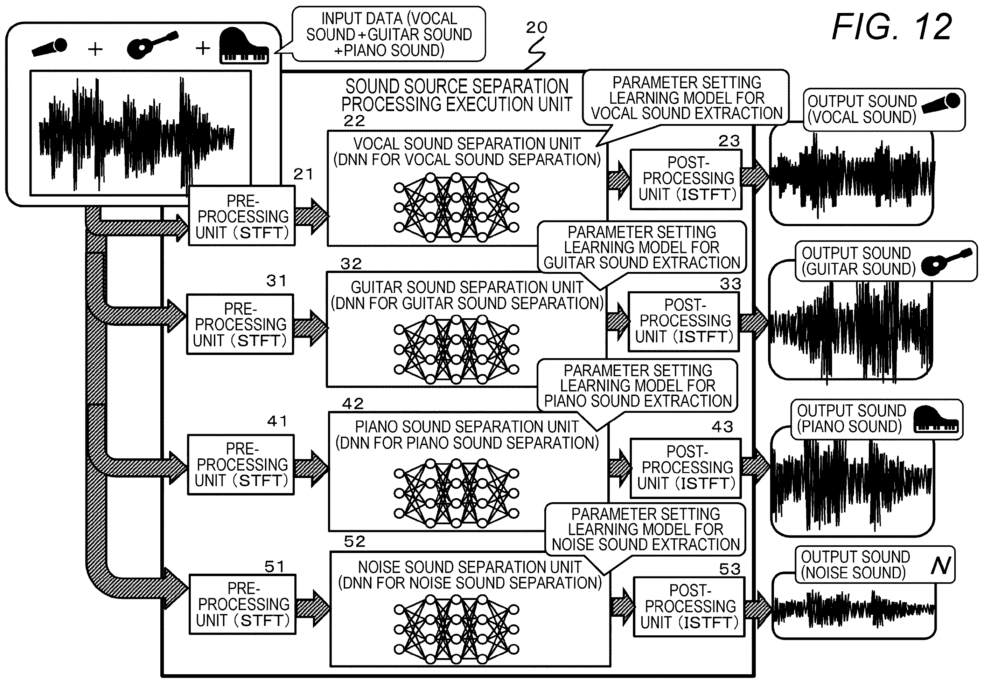

A specific example is illustrated in Fig. 12.

The sound source separation processing execution unit 20 illustrated in Fig. 12 inputs input data similar to the configuration illustrated in Fig. 11 described above, that is, audio data in which a vocal sound of the user, a guitar sound, and a piano sound are mixed, and executes the sound source separation processing.

The difference from the configuration illustrated in Fig. 11 is that processing of extracting and separating the noise sound included in the input data is executed in addition to the processing of separating the vocal sound, the guitar sound, and the piano sound from the input data.

In the example illustrated in Fig. 12, a vocal sound separation unit (DNN for vocal sound separation) 22 extracts a vocal sound included in input data.

The guitar sound separation unit (DNN for guitar sound separation) 32 extracts the guitar sound included in the input data.

The piano sound separation unit (DNN for piano sound separation) 42 extracts the piano sound included in the input data.

Furthermore, the noise sound included in the input data is extracted by the configurations of the pre-processing unit (STFT) 51, the noise sound separation unit (DNN for noise sound separation) 52, and the post-processing unit (ISTFT) 53 illustrated in Fig. 12.

The upper noise sound separation unit (DNN for noise sound separation) 52 is a neural network (learning model) that extracts sound data having a feature amount that does not correspond to any of a vocal sound, a guitar sound, and a piano sound from audio data of various sound sources included in the input data. That is, the neural network is a neural network unique to the noise sound in which parameters unique to the noise sound specialized for the noise sound extraction are set.

As described above, in order to generate the vocal sound separation unit (DNN for vocal sound separation) 22, the guitar sound separation unit (DNN for guitar sound separation) 32, the piano sound separation unit (DNN for piano sound separation) 42, and the noise sound separation unit (DNN for noise sound separation) 52, learning processing using learning data for generating each neural network is required.

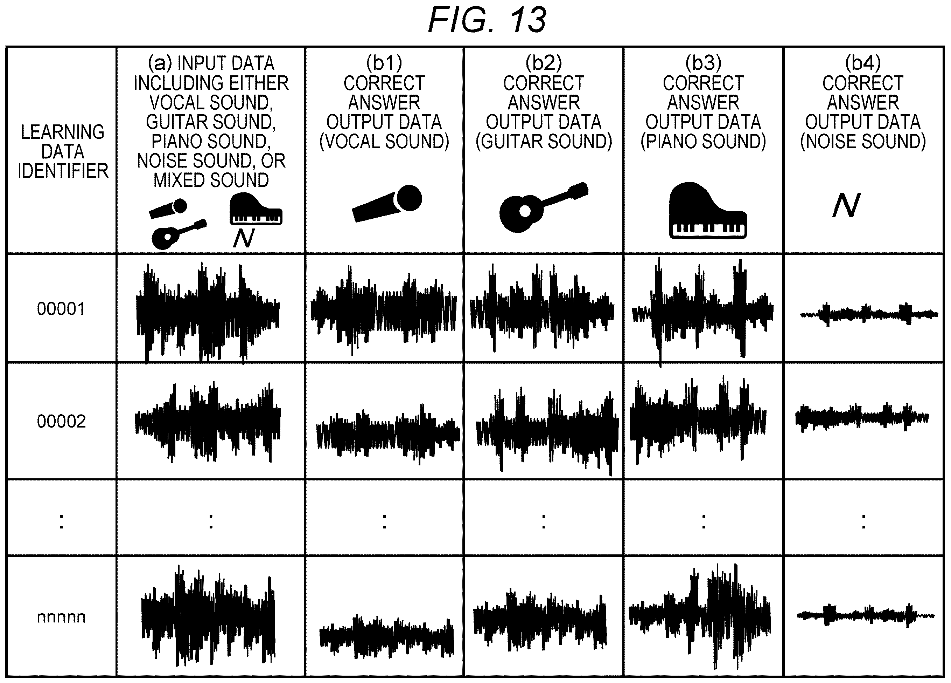

Fig. 13 illustrates an example of learning data necessary for generating these four neural networks.

The learning data illustrated in Fig. 13 is an example of learning data necessary for generating four neural networks constituting the four sound source separation units illustrated in Fig. 12, and is an example of learning data necessary for performing the supervised learning processing described above.

Specifically, supervised learning processing is performed using a large number of "input data" including mixed data of various sound source data and "correct answer data" obtained by extracting only each sound source from each input data, that is,
(b1) correct answer data of vocal sound,
(b2) correct answer data of guitar sound,
(b3) correct answer data of the piano sound, and
(b4) correct answer data of noise sound.

A large number of pieces of learning data each including a pair of "input data" and "correct answer data" are prepared, and as described above with reference to Fig. 3 and the like, the "input data" is sequentially input to each sound source separation unit (DNN) via the pre-processing unit (STFT), the "output data" output from the post-processing unit (ISTFT) is compared with the "correct answer data", and the parameters of the neural network constituting each sound source separation unit (DNN) are sequentially updated such that the difference between the "output data" and the "correct answer data" becomes small.

By repeating this processing, the separation performance of each sound source separation unit (DNN) can be gradually improved. When the separation performance at the preset allowable level is obtained, the learning processing ends.

Such learning processing needs to be performed for each sound source. As the number of sound sources to be separated increases, the necessary learning data and the number of processes of the learning processing increase, and thus there is a problem that the learning cost becomes enormous according to the number of sound sources to be separated.

In addition, as described above, since the configuration of the neural network (learning model) such as the DNN corresponding to each sound source and the parameters to be set are also different for each sound source, there is a problem that the memory amount for recording these data becomes enormous.

The present disclosure solves these problems, and the configuration and processing of the present disclosure will be described below.

### [2. Overview of Sound Source Separation Processing Using Information Processing Apparatus of Present Disclosure]

Hereinafter, an overview of sound source separation processing using the information processing apparatus of the present disclosure will be described.

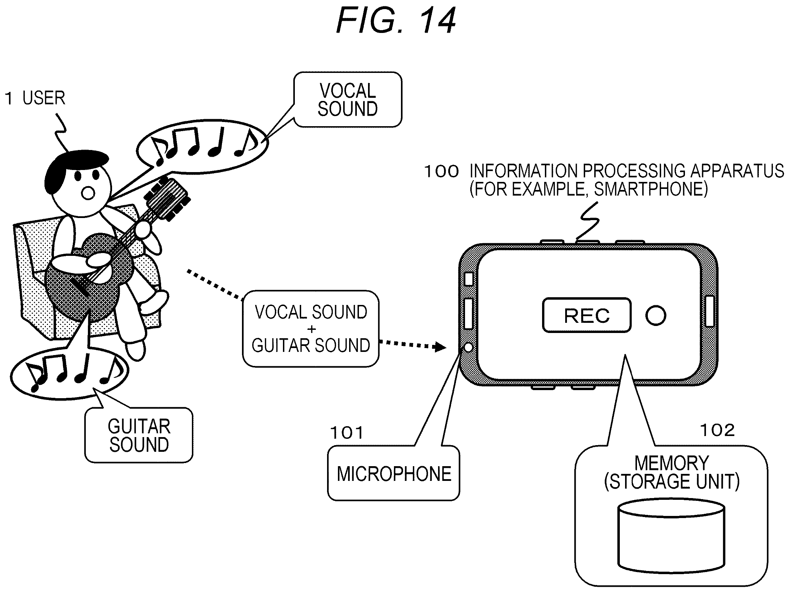

First, an example of sound source separation processing using the information processing apparatus 100 of the present disclosure will be described with reference to Fig. 14.

An information processing apparatus 100 illustrated in Fig. 14 is a smartphone.

However, the smartphone is an example, and the information processing apparatus 100 of the present disclosure is not limited to the smartphone, and may be various apparatuses such as a PC and a tablet terminal.

A user 1 illustrated in Fig. 14 sings a song along with a guitar that the user plays. The vocal sound that is the singing voice of the user 1 and the guitar sound are input to the microphone 101 of the information processing apparatus (smartphone) 100 illustrated in Fig. 1 and are recorded in the memory (storage unit) 102 inside the information processing apparatus 100.

When the recording is completed, next, the user 1 can start sound source separation processing of the audio data recorded in the memory (storage unit) 102 inside the information processing apparatus 100.

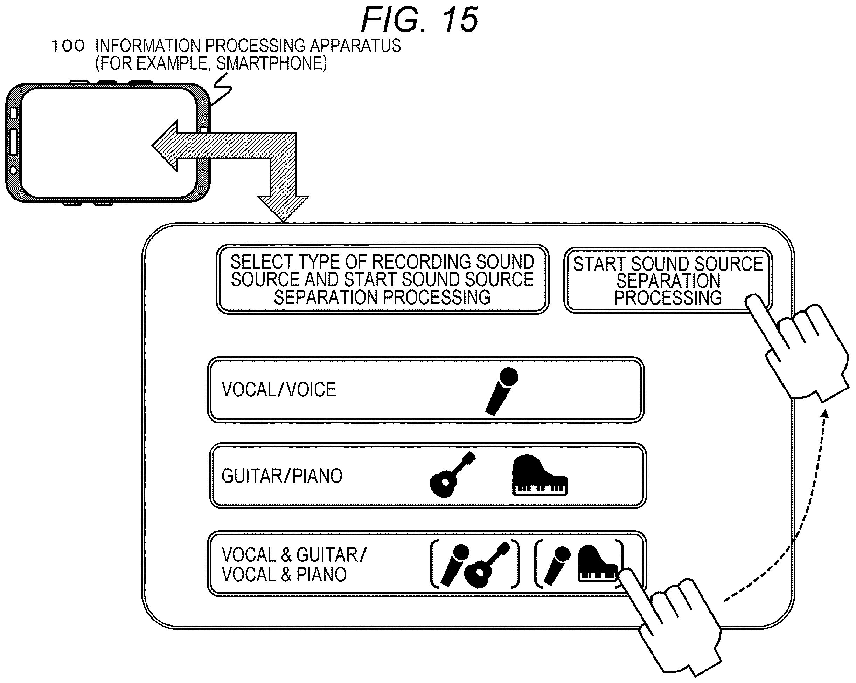

For example, a user interface (UI) as illustrated in Fig. 15 is displayed on the display unit of the information processing apparatus 100, and the user uses the UI to instruct the start of the sound source separation processing.

The UI displayed on the display unit of the information processing apparatus 100 is a UI that selects and designates the type of the sound source included in the recorded audio data.
(a) Vocal/Voice
(b) Guitar/Piano
(c) Vocal and Guitar/Vocal and Piano

One of these three options is selected.
"(a) Vocal/Voice" is selected in a case where the sound source included in the recorded audio data is a singing sound (vocal) without a musical instrument or a conversation sound (voice).
"(b) Guitar/Piano" is selected in a case where the sound source included in the recorded audio data is a guitar sound without vocals or a piano sound.
"(c) Vocal and Guitar/Vocal and Piano" is selected in a case where the sound sources included in the recorded audio data are vocal and guitar sound, or vocal and piano sound.

The information processing apparatus 100 of the present disclosure executes sound source separation processing according to the types of the recording sound sources designated by the user.

Details of the sound source separation processing executed by the information processing apparatus 100 of the present disclosure will be described later.

When the user selects a sound source type included in the audio data recorded using the UI illustrated in Fig. 15 and gives a sound source separation start instruction, a data processing unit (sound source separation processing execution unit) in the information processing apparatus 100 performs sound source separation processing. As a result of this processing, an audio data file in units of sound sources is generated, and
the generated audio data file in units of sound sources is stored in the memory (storage unit).

When this sound source separation processing ends, the user can perform editing processing on each audio data in units of sound sources.

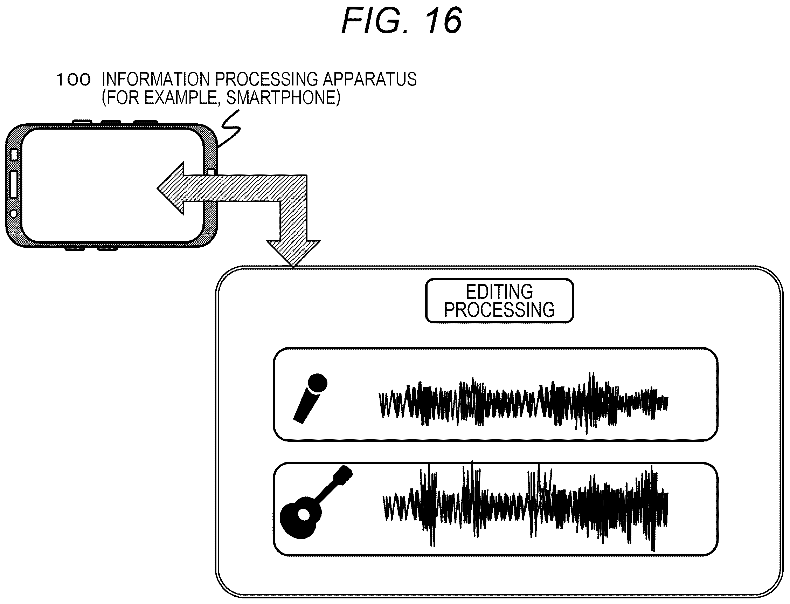

The display unit of the information processing apparatus 100 displays an editing screen as illustrated in Fig. 16, for example.

In the example illustrated in Fig. 16, the audio data of the vocal sound and the audio data of the guitar sound generated by the sound source separation processing are displayed side by side.

The user 1 can perform editing processing of the audio data of each sound source unit using such an editing screen. For example, it is possible to perform various editing processing for each sound source data, such as volume adjustment, pitch adjustment, and timing adjustment of only a vocal sound.

### [3. Configuration Example of Information Processing Apparatus of Present Disclosure]

Next, a configuration example of the information processing apparatus of the present disclosure will be described.

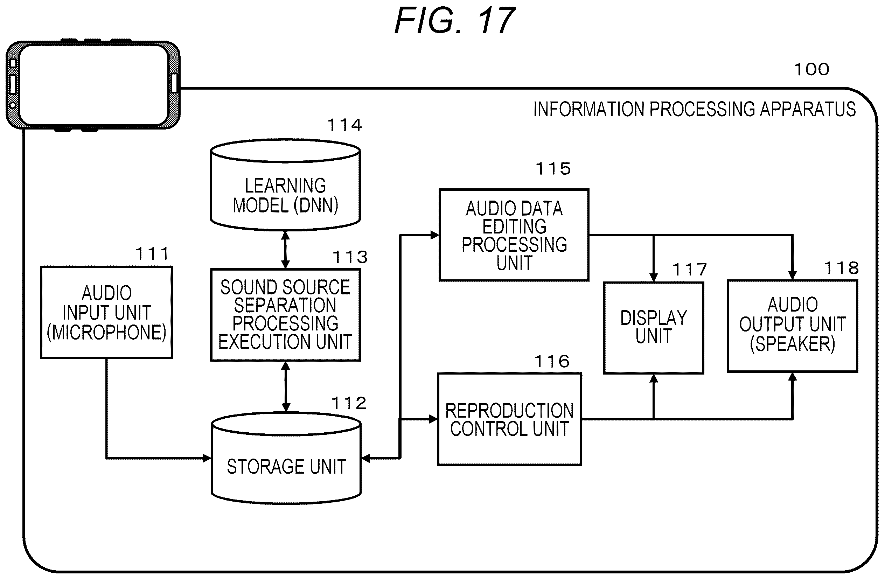

Fig. 17 is a block diagram illustrating a configuration example of the information processing apparatus 100 of the present disclosure.

As illustrated in Fig. 17, the information processing apparatus 100 of the present disclosure includes an audio input unit (microphone) 111, a storage unit 112, a sound source separation processing execution unit 113, a learning model (DNN) 114, an audio data editing processing unit 115, a reproduction control unit 116, a display unit 117, and an audio output unit (speaker) 118.

Note that the components (processing blocks) illustrated in the information processing apparatus 100 illustrated in Fig. 17 illustrate main components necessary for performing the processing of the present disclosure. The information processing apparatus 100 includes various components in addition to these components. For example, there are various components such as a communication unit, an input unit, a control unit, and a camera.

Further, the sound source processing apparatus may include an "audio data file output unit" that outputs the sound source data file storing the sound source data of each sound source separated in the sound source separation processing execution unit 113 to an external device. The sound source data file (wav file or the like) of each sound source after the sound source separation processing is output from the "audio data file output unit" to an external device (PC, editing device, and the like), so that the external device can perform the sound source data editing processing (volume adjustment, sound quality adjustment, and the like). Furthermore, it is also possible to perform processing of outputting an edited synthesis data file generated by re-synthesizing after the sound source data editing processing in the audio data editing processing unit 115 in the information processing apparatus 100 from the "audio data file output unit" to an external device.

Hereinafter, details of the components of the information processing apparatus 100 illustrated in Fig. 17 will be described.

The audio input unit (microphone) 111 is a microphone, and inputs the voice of the user or a musical instrument sound of a guitar or the like.

The storage unit 112 records audio data input via the audio input unit (microphone) 111.

The sound source separation processing execution unit 113 executes sound source separation processing of inputting the audio data recorded in the storage unit 112 and separating the audio data into data corresponding to each sound source included in the audio data.

Details of the sound source separation processing will be described later.

Note that the audio data file in units of sound sources separated by the sound source separation processing execution unit 113 is stored in the storage unit 112.

The learning model (DNN) 114 is a learning model used for the sound source separation processing executed by the sound source separation processing execution unit 113, for example, a neural network such as a deep neural network (DNN).

Details of the learning model (DNN) 114 used by the information processing apparatus of the present disclosure will be described later.

The audio data editing processing unit 115 is, for example, a data processing unit that displays a UI as described above with reference to Fig. 16 and executes the audio data editing processing of each sound source unit according to an instruction of the user.

The audio data editing processing unit 115 reads the audio data file of the sound source unit separated in the sound source separation processing execution unit 113 from the storage unit 112, displays the audio data information of the sound source unit as described with reference to Fig. 16 on the display unit 117, changes and edits the audio data of the sound source unit according to the user instruction, and stores the result in the storage unit 112.

The reproduction control unit 116 executes processing of reading and reproducing the audio data stored in the storage unit 112, for example, the audio data at the time of recording or the audio data file of the sound source unit separated in the processing execution unit 113 from the storage unit 112.

The display unit 117 displays, for example, the UI as described with reference to Figs. 15 and 16. Note that the display unit 117 is a touch panel type display unit, and has a configuration capable of performing various input processing and instructions by a user operation.

The audio output unit (speaker) 118 is, for example, a speaker that outputs audio data or the like reproduced by the processing of the reproduction control unit 116.

### [4. Details of Sound Source Separation Processing Executed by Information Processing Apparatus of Present Disclosure]

Next, details of the sound source separation processing executed by the information processing apparatus of the present disclosure will be described.

In the sound source separation processing executed by the information processing apparatus 100 of the present disclosure, it is assumed that the use mode as described above with reference to Fig. 14, in other words, the user 1 executes the sound source separation processing of the audio data recorded using the information processing apparatus 100 such as a smartphone, and the types of sound sources to be separated are limited, and a plurality of different musical instruments and the like are collectively separated by one learning model (DNN or the like).

That is, it is assumed that the use mode mainly uses personal voice recording by the user 1. Specifically, there is a configuration in which recording processing of any one of recording of the singing sound (vocal) or the conversation sound (voice) of the user 1, playing of the guitar or the piano, or singing (vocal) matched to the playing of the guitar or the piano is performed, and sound source separation processing is performed on any one of the recorded data.

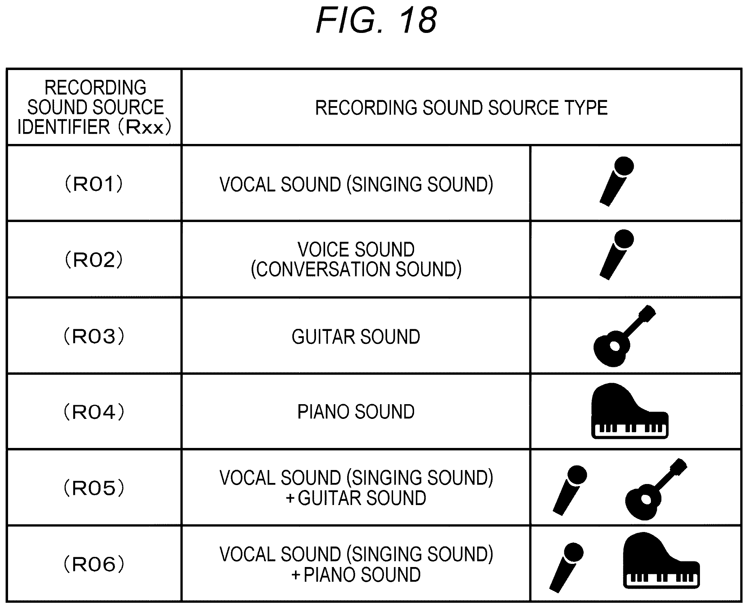

Fig. 18 illustrates types of audio data (recorded data) to be subjected to the sound source separation processing executed by the information processing apparatus 100 of the present disclosure.

The audio data (recorded data) to be subjected to the sound source separation processing executed by the information processing apparatus 100 of the present disclosure is any of the following data:
(R01) Vocal sound (singing sound)
(R02) Voice sound (conversation sound)
(R03) Guitar sound
(R04) Piano sound
(R05) Vocal sound (singing sound) + guitar sound
(R06) Vocal sound (singing sound) + piano sound
"(R01) Vocal sound (singing sound)" is a singing sound without a musical instrument.
"(R02) Voice sound (conversation sound)" is not singing but a conversation sound.
"(R03) Guitar sound" is a playing sound of a guitar without singing.
"(R04) Piano sound" is a playing sound of a piano without singing.
"(R05) Vocal sound (singing sound) + guitar sound" is a mixed sound of the singing sound and the playing sound of the guitar.
"(R06) Vocal sound (singing sound) + piano sound" is a mixed sound of the singing sound and the playing sound of the piano.

The audio data (recorded data) to be subjected to the sound source separation processing executed by the information processing apparatus 100 of the present disclosure is limited to any one of (R01) to (R06) illustrated in Fig. 18.

Furthermore, the sound source separation processing executed by the information processing apparatus 100 of the present disclosure uses one learning model (DNN or the like) in units of categories, for example, by grouping a plurality of different musical instruments and the like as one category.

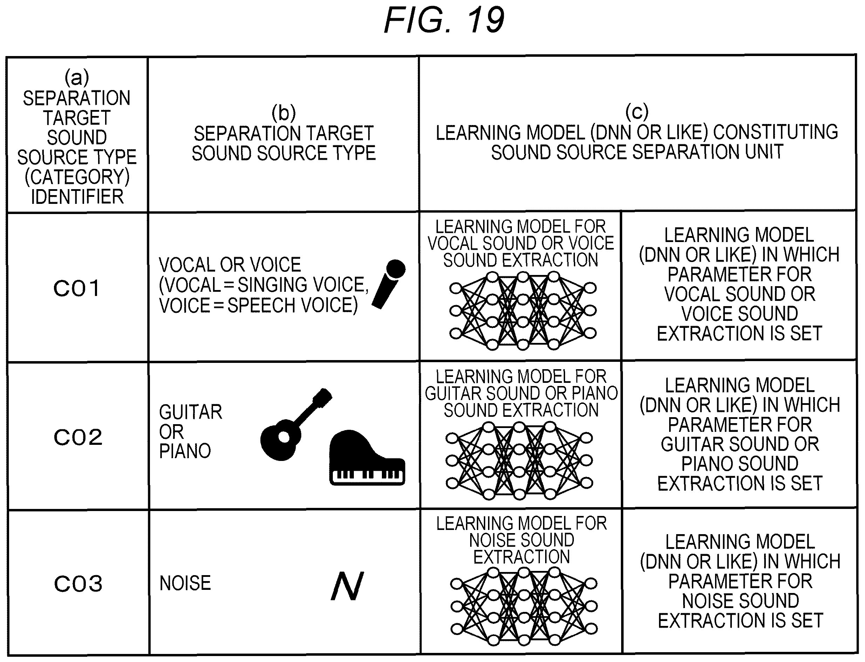

Specifically, as illustrated in Fig. 19, the sound source separation processing is divided into three sound source categories (three sound source types), and the separation processing in units of these categories (types) is executed.

That is, as illustrated in Fig. 19,
(C01) vocal sound (singing sound) or voice sound (conversation sound);
(C02) guitar sound or piano sound; and
(C03) noise sound,
processing of separating these three types of sound source separation using a learning model (DNN or the like) corresponding to each category (type) is executed.

That is, the vocal sound (singing sound) and the voice sound (conversation sound) are not distinguished from each other, and are separated using one learning model (DNN or the like) as sounds (voices) of the same category (type).

Similarly, the guitar sound and the piano sound are not distinguished, and are separated using one learning model (DNN or the like) as sounds of the same category (musical instrument sounds).

In addition to these two types of sound source categories, noise sounds are also separated as sounds of one category using one learning model (DNN or the like).

According to such classification of sound source types, there are only three types of learning models (neural networks such as DNN) used for the sound source separation processing by the information processing apparatus 100 of the present disclosure.

That is, as illustrated in the item (c) of Fig. 19, the following three types of learning models (neural network such as DNN) are generated and used.
(C01) learning model corresponding to voice (DNN or the like) in which parameter for extracting vocal sound (singing sound) or voice sound (conversation sound) is set
(C02) Learning model corresponding to guitar sound and piano sound (DNN or the like) in which parameter for extracting guitar sound or piano sound is set
(C03) Learning model corresponding to noise sound (DNN or the like) in which parameter for extracting noise sound is set

The information processing apparatus 100 of the present disclosure uses only these three types of learning models (neural network such as DNN) for sound source separation processing.

As described above, the information processing apparatus 100 of the present disclosure generates and uses the learning model (neural network such as DNN) that does not distinguish between the vocal sound (singing sound) and the voice sound (conversation sound) but separates the vocal sound and the voice sound as sounds (voices) of the same category (type).

In addition, a learning model (neural network such as DNN) for separating a guitar sound and a piano sound as sounds of the same category (musical instrument sounds) without distinguishing the guitar sound and the piano sound is generated and used.

As described above, the learning model (neural network such as DNN) for each sound source category can be generated and used because the sounds in each category have a common feature.

That is, there is a feature of a sound common to a vocal sound (singing sound) and a voice sound (conversation sound), and there is a feature of a sound common to a guitar sound and a piano sound.

The information processing apparatus 100 of the present disclosure extracts audio data having a common feature in units of categories, using one learning model (DNN) in units of categories.

Features of sounds common to the vocal sound (singing sound) and the voice sound (conversation sound) include, for example, the following feature points.
(Common feature point 1) Sound accompanied by a person's utterance.
(Common feature point 2) Having vowel sound that can be identified.
(Common feature point 3) Having an identifiable consonant.
(Common feature point 4) Having respiratory sound from oral cavity.
(Common feature point 5) Having respiratory sound from the nose.
(Common feature point 6) Accompanied by a sound coming out from the nose at the time of vocalization.
(Common feature point 7) Accompanied by a sound reverberates from the head or chest when being uttered.

Note that vowel sound illustrated in (common feature point 2) is sound having echo and resonance due to vocal cord vibration and oral cavity, and a double tone harmonic (harmonic) structure.

Furthermore, the consonants illustrated in (common feature point 3) are collision sounds of the tongues, lips, teeth, and the like, and sounds through which air passes.

As described above, since the vocal sound (singing sound) and the voice sound (conversation sound) have the features of the common sound as described above, one learning model (neural network such as DNN) for extracting the vocal sound (singing sound) and the voice sound (conversation sound) can be generated and used.

Note that, in order to verify the above theory, verification was performed using a learning model (DNN) learned to be separated into vocal sound (singing sound), guitar sound, and noise sound.

In the verification processing, a pure sound (audio data not mixed with other sounds) of a voice sound (conversation sound) is input to a learning model (DNN) learned to be separated into a vocal sound (singing sound), a guitar sound, and a noise sound, and a separation result thereof is analyzed.

As a result of this analysis, it has been confirmed that the voice sound (conversation sound) is almost completely separated as a vocal sound (singing sound), and is hardly separated as a guitar sound or a noise sound.

That is, it has been confirmed that the voice sound (conversation sound) and the vocal sound (singing sound) can be separated as the audio data of one sound source by the sound source separation processing using one learning model (DNN).

Similarly, features of the sound common to the guitar sound and the piano sound include, for example, the following feature points.
(Common feature point 1) Sound in which the same frequency sound continues for a certain period due to string vibration.
(Common feature point 2) Having a frequency characteristic having a double tone harmonic (harmonic) structure.
(Common feature point 3) Having a regular exponential decay (regular volume and change in tone) characteristic for each harmonic.
(Common feature point 4) Having linear sound characteristics.
(Common feature point 5) The pitch (fundamental frequency) is constant, and there is no time change (vibrato or the like).
(Common feature point 6) Having 12 scales (there is no pitch other than 12 scales).
(Common feature point 7) Having a chord (a plurality of pitches sound simultaneously).
(Common feature point 8) Sound having a constant sound.

Note that the linear sound characteristic illustrated in (common feature point 4) means a sound characteristic in which there is no distortion, such that when played strongly, the sound becomes loud, and when played simultaneously in plurality, the resulting sound is the sum of the sounds.

In addition, the sound having a certain sound illustrated in (common feature point 8) means not a simple string vibration but a sound in which vibration reverberates, resonates, or is partially absorbed by a wooden body, a sound board, or the like.

As described above, since the guitar sound and the piano sound have the features of the common sound as described above, one learning model (neural network such as DNN) for extracting the guitar sound and the piano sound can be generated and used.

Note that, in order to verify the above theory, verification using a learning model (DNN) learned so as to be separated into vocal sound (singing sound), guitar sound, and noise sound was performed.

In the verification processing, a pure sound of a piano sound (audio data in which other sounds are not mixed) is input to a learning model (DNN) learned to be separated into a vocal sound (singing sound), a guitar sound, and a noise sound, and a separation result thereof is analyzed.

As a result of this analysis, it has been confirmed that the piano sound is almost completely separated as a guitar sound and hardly separated as a vocal sound (singing sound) or a noise sound.

That is, it has been confirmed that the piano sound and the guitar sound can be separated as the audio data of one sound source by the sound source separation processing using one learning model (DNN).

On the basis of these verifications, the information processing apparatus 100 of the present disclosure executes processing of separating a vocal sound (singing sound) and a voice sound (conversation sound) using one learning model (neural network such as DNN) as a sound (voice) of the same category (type) without distinguishing the vocal sound and the voice sound.

Similarly, the processing of separating the guitar sound and the piano sound using one learning model (neural network such as DNN) as sounds of the same category (musical instrument sounds) is executed without distinguishing the guitar sound and the piano sound.

With such category classification of the sound source types, the information processing apparatus 100 of the present disclosure can use only three types of learning models (neural networks such as DNNs) used for the sound source separation processing.

That is, as illustrated in the item (c) of Fig. 19, the following three types of learning models (neural network such as DNN) are generated and used.
(C01) learning model corresponding to voice (DNN or the like) in which parameter for extracting vocal sound (singing sound) or voice sound (conversation sound) is set
(C02) Learning model corresponding to guitar sound and piano sound (DNN or the like) in which parameter for extracting guitar sound or piano sound is set
(C03) Learning model corresponding to noise sound (DNN or the like) in which parameter for extracting noise sound is set

The information processing apparatus 100 of the present disclosure uses only these three types of learning models (neural network such as DNN) for sound source separation processing.

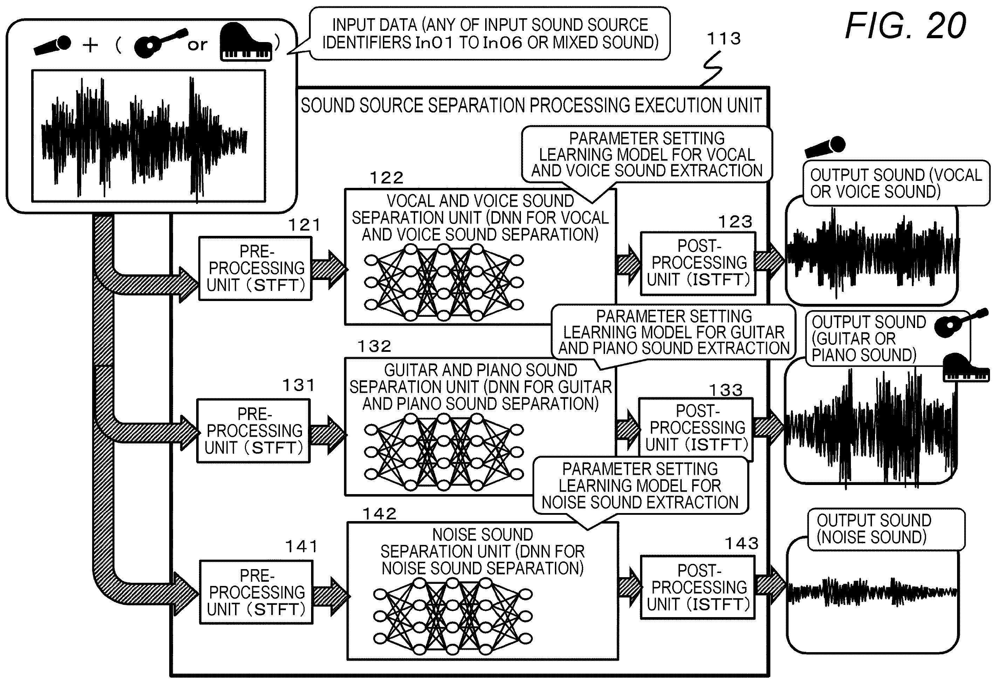

Next, a configuration example of the sound source separation processing execution unit 113 of the information processing apparatus 100 of the present disclosure and processing to be executed will be described with reference to Fig. 20.

The sound source separation processing execution unit 113 illustrated in Fig. 20 inputs the input data illustrated in the upper left of Fig. 20 from the storage unit 112.

The input data is any one of the following data described with reference to Fig. 18.
(R01) Vocal sound (singing sound)
(R02) Voice sound (conversation sound)
(R03) Guitar sound
(R04) Piano sound
(R05) Vocal sound (singing sound) + guitar sound
(R06) Vocal sound (singing sound) + piano sound

The sound source separation processing execution unit 113 executes processing of inputting any one of the audio data (R01) to (R06) and separating the audio data into data in units of sound sources.

However, as described with reference to Fig. 19, the vocal sound (singing sound) and the voice sound (conversation sound) are not distinguished but separated as sounds (voices) of the same category (type).

Similarly, the guitar sound and the piano sound are not distinguished and are separated as sounds of the same category (musical instrument sounds).

That is, processing of separating sound sources into the following three types of sound sources (C01) to (C03) is executed.
(C01) Vocal sound (singing sound) or voice sound (conversation sound)
(C02) Guitar sound or piano sound
(C03) Noise sound

The sound source separation processing execution unit 113 of the information processing apparatus 100 of the present disclosure executes these three types of sound source separation processing.

That is, the vocal sound (singing sound) and the voice sound (conversation sound) are not distinguished, and are separated as sounds (voices) of the same category (type).

Similarly, the guitar sound and the piano sound are not distinguished and are separated as sounds of the same category (musical instrument sounds).

In addition to these two types of sound source categories, noise sounds are also separated as sounds of one category.

The sound source separation processing execution unit 113 illustrated in Fig. 20 performs sound source separation processing using a learning model including a neural network, for example, a neural network such as a deep neural network (DNN).

As illustrated in Fig. 20, the sound source separation processing execution unit 113 includes these three types of data processing units of:
a series of data processing units including a pre-processing unit (STFT) 121, a vocal and voice sound separation unit (DNN for vocal and voice sound separation) 122, and a post-processing unit (ISTFT) 123;
a series of data processing units including a pre-processing unit (STFT) 131, a guitar and piano sound separation unit (DNN for guitar and piano sound separation) 132, and a post-processing unit (ISTFT) 133; and
a series of data processing units including a pre-processing unit (STFT) 141, a noise sound separation unit (DNN for noise sound separation) 142, and a post-processing unit (ISTFT) 143.

The pre-processing unit (STFT) 121, the vocal and voice sound separation unit (DNN for vocal and voice sound separation) 122, and the post-processing unit (ISTFT) 123 illustrated in the upper part extract a vocal sound (singing sound) or a voice sound (conversation sound) included in the input data.

Furthermore, the guitar sound or the piano sound included in the input data is extracted by the configurations of the pre-processing unit (STFT) 131, the guitar and piano sound separation unit (DNN for guitar and piano sound separation) 132, and the post-processing unit (ISTFT) 133 illustrated in the middle part.

Furthermore, the noise sound included in the input data is extracted by the configurations of the pre-processing unit (STFT) 141, the noise sound separation unit (DNN for noise sound separation) 142, and the post-processing unit (ISTFT) 143.

The pre-processing unit (STFT) 121, 131, and 141 illustrated in each stage executes short-time Fourier trasform (STFT) on the input data.

Through this STFT processing, input data that is data in a time domain in which an audio signal changes along a time axis is converted into data in a frequency domain (frequency spectrum).

This conversion data is input to each sound separation unit (DNN for sound separation) 122, 132, 142.

Note that, in a case of a configuration in which the same processing is executed on the same input, the pre-processing units (STFT) 121, 131, and 141 illustrated in the respective stages may be collectively configured as one pre-processing unit (STFT).

Each sound separation unit (DNN for sound separation) 122, 132, and 142 is a sound source separation unit configured by a neural network, specifically, a learning model such as deep neural network (DNN), for example.

The vocal and voice sound separation unit (DNN for vocal and voice sound separation) 122 extracts a vocal sound (singing sound) or a voice sound (conversation sound) included in the input data using a learning model such as DNN.

The guitar and piano sound separation unit (DNN for guitar and piano sound separation) 132 extracts a guitar sound or a piano sound included in the input data using a learning model such as DNN.

The noise sound separation unit (DNN for noise sound separation) 142 extracts a noise sound included in the input data using a learning model such as DNN.

Each sound source data which is processing data of each sound separation unit (DNN for sound separation) 122, 132, and 142 is input to the post-processing unit (ISTFT) 123, 133, and 143.

The post-processing unit (ISTFT) 123, 133, and 143 executes reverse processing of the pre-processing unit (STFT) 121, 131, and 141 described above. That is, inverse short-time Fourier trasform (ISTFT) is executed.

By this ISTFT processing, data in the frequency domain (frequency spectrum) is converted into data in the time domain in which the audio signal changes along the original time axis.

The output of the upper post-processing unit (ISTFT) 123 is audio data extracted by the vocal and voice sound separation unit (DNN for vocal and voice sound separation) 122, that is, audio data of a vocal sound (singing sound) or a voice sound (conversation sound).

The output of the middle post-processing unit (ISTFT) 133 is the audio data extracted by the guitar and piano sound separation unit (DNN for guitar and piano sound separation) 132, that is, the audio data of the guitar sound or the piano sound.

Furthermore, the output of the lower post-processing unit (ISTFT) 143 is the audio data extracted by the noise sound separation unit (DNN for noise sound separation) 142, that is, the audio data of the noise sound.

As described above, the sound source separation processing execution unit 113 of the information processing apparatus 100 of the present disclosure performs
sound source separation processing using these three types of sound source separation units of:
a vocal and voice sound separation unit (DNN for vocal and voice sound separation) 122;
a guitar and piano sound separation unit (DNN for guitar and piano sound separation) 132; and
a noise sound separation unit (DNN for noise sound separation) 142.

That is, the processing of separating the sound source into the following three types of sound sources (C01) to (C03) is executed using these three types of sound source separation units.
(C01) Vocal sound (singing sound) or voice sound (conversation sound)
(C02) Guitar sound or piano sound
(C03) Noise sound

The sound source separation processing execution unit 113 of the information processing apparatus 100 of the present disclosure does not distinguish between the vocal sound (singing sound) and the voice sound (conversation sound), and separates the vocal sound and the voice sound as sounds (voices) of the same category (type).

Similarly, the guitar sound and the piano sound are not distinguished and are separated as sounds of the same category (musical instrument sounds).

Note that the vocal and voice sound separation unit (DNN for vocal and voice sound separation) 122 includes a neural network (learning model) that extracts sound data having a feature amount (frequency or the like) of a vocal sound (singing sound) or a voice sound (conversation sound) corresponding to human voice from audio data of various sound sources included in the input data.

The learning model (neural network such as DNN) constituting the vocal and voice sound separation unit (DNN for vocal and voice sound separation) 122 is a neural network that extracts audio data having a feature of a sound common to the vocal sound (singing sound) and the voice sound (conversation sound) described above, which is a sound having a frequency corresponding to the human voice.

That is, the neural network is a neural network that extracts audio data having feature points of the following sounds common to a vocal sound (singing sound) and a voice sound (conversation sound).
(Common feature point 1) Sound accompanied by a person's utterance.
(Common feature point 2) Having vowel sound that can be identified.
(Common feature point 3) Having an identifiable consonant.
(Common feature point 4) Having respiratory sound from oral cavity.
(Common feature point 5) Having respiratory sound from the nose.
(Common feature point 6) Accompanied by a sound coming out from the nose at the time of vocalization.
(Common feature point 7) Accompanied by a sound reverberates from the head or chest when being uttered.

Furthermore, the guitar and piano sound separation unit (DNN for guitar and piano sound separation) 132 includes a neural network (learning model) that extracts sound data having feature amounts of the guitar sound or the piano sound from the audio data of various sound sources included in the input data.

The learning model (neural network such as DNN) constituting the guitar and piano sound separation unit (DNN for guitar and piano sound separation) 132 is a neural network that extracts audio data that is a sound having a frequency corresponding to the guitar sound or the piano sound and further has a feature (frequency or the like) of a sound common to the guitar sound and the piano sound described above.

That is, the neural network is a neural network that extracts audio data having feature points of the following sounds common to the guitar sound and the piano sound.
(Common feature point 1) Sound in which the same frequency sound continues for a certain period due to string vibration.
(Common feature point 2) Having a frequency characteristic having a double tone harmonic (harmonic) structure.
(Common feature point 3) Having a regular exponential decay (regular volume and change in tone) characteristic for each harmonic.
(Common feature point 4) Having linear sound characteristics.
(Common feature point 5) The pitch (fundamental frequency) is constant, and there is no time change (vibrato or the like).
(Common feature point 6) Having 12 scales (there is no pitch other than 12 scales).
(Common feature point 7) Having a chord (a plurality of pitches sound simultaneously).
(Common feature point 8) Sound having a constant sound.

Furthermore, the noise sound separation unit (DNN for noise sound separation) 142 includes a neural network (learning model) that extracts sound data having a feature amount of the noise sound from audio data of various sound sources included in the input data.

In order to generate these learning models (DNN), it is necessary to perform learning processing. The sound source separation processing execution unit 113 of the information processing apparatus 100 of the present disclosure uses only the three types of learning models (DNN) as the learning model (DNN), and thus the learning processing cost is reduced.

The learning processing for generating the learning model (DNN) is the above-described "supervised learning processing".

That is, learning processing is performed using a data set of a large number of "input data" including mixed data of various sound source data and "correct answer data" that is extraction data of the sound source data to be separated included in each input data.

As described above, in the supervised learning processing, correct answer data for the input data is prepared in advance, the input data is input to the sound separation unit (DNN for sound separation) via the pre-processing unit (STFT), and the separation processing result in the sound separation unit (DNN for sound separation) is output via the post-processing unit (ISTFT) to obtain "output data".

The "output data" is compared with the "correct answer data", and processing of setting and updating the parameters of the neural network constituting the sound separation unit (DNN for sound separation) is executed so that the difference between the two pieces of data becomes small.

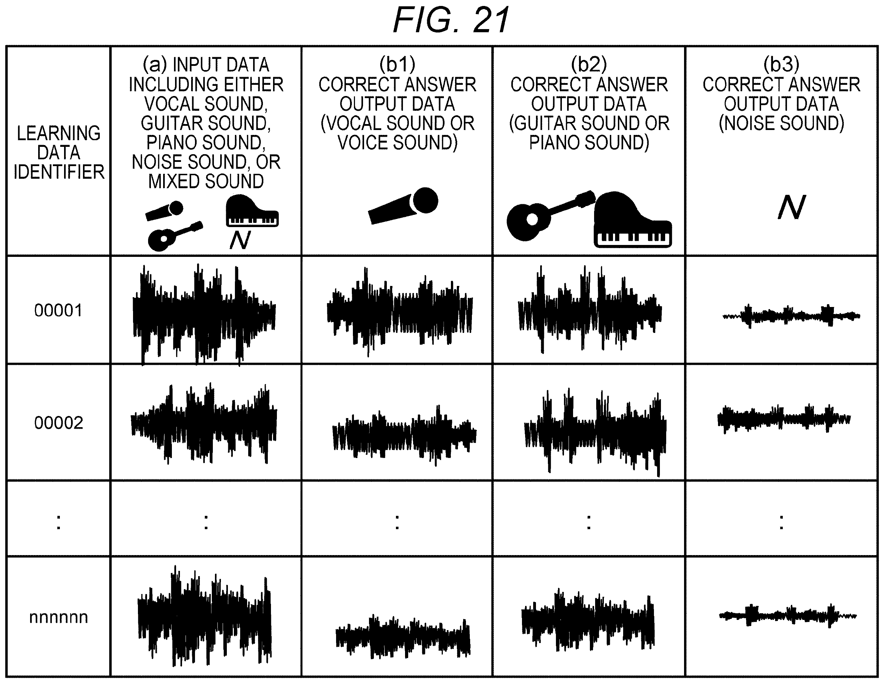

An example of learning data used for learning processing (supervised learning) for generating three types of learning models (DNN) used by the sound source separation processing execution unit 113 of the information processing apparatus 100 according to the present disclosure will be described with reference to Fig. 21.

The learning data illustrated in Fig. 21 is an example of learning data necessary for generating three neural networks constituting the three sound source separation units illustrated in Fig. 20, and is an example of learning data necessary for performing the supervised learning processing.

Specifically, supervised learning processing is performed using a large number of "input data" including mixed data of various sound source data and "correct answer data" obtained by extracting only each sound source from each input data, that is,
(b1) correct answer data of vocal sound (singing sound) or voice sound (conversation sound),
(b2) correct answer data of guitar sound or piano sound, and
(b3) correct answer data of noise sound.

A large number of pieces of learning data each including a pair of "input data" and "correct answer data" are prepared, and as described above with reference to Fig. 3 and the like, the "input data" is sequentially input to each sound source separation unit (DNN) via the pre-processing unit (STFT), the "output data" output from the post-processing unit (ISTFT) is compared with the "correct answer data", and the parameters of the neural network constituting each sound source separation unit (DNN) are sequentially updated such that the difference between the "output data" and the "correct answer data" becomes small.

By repeating this processing, the separation performance of each sound source separation unit (DNN) can be gradually improved. When the separation performance at the preset allowable level is obtained, the learning processing ends.

In the configuration of the present disclosure, such learning processing is executed to generate the following three types of learning models (DNN).
(1) Learning model (DNN) for vocal sound (singing sound) or voice sound (conversation sound) extraction
(2) Learning model (DNN) for guitar sound or piano sound extraction
(3) Learning model (DNN) for noise sound extraction

Since it is only necessary to generate a learning model that does not distinguish between a vocal sound (singing sound) and a voice sound (conversation sound) and a learning model that does not distinguish between a guitar sound and a piano sound instead of performing learning processing for each sound source as in the related art, the learning processing cost is reduced.

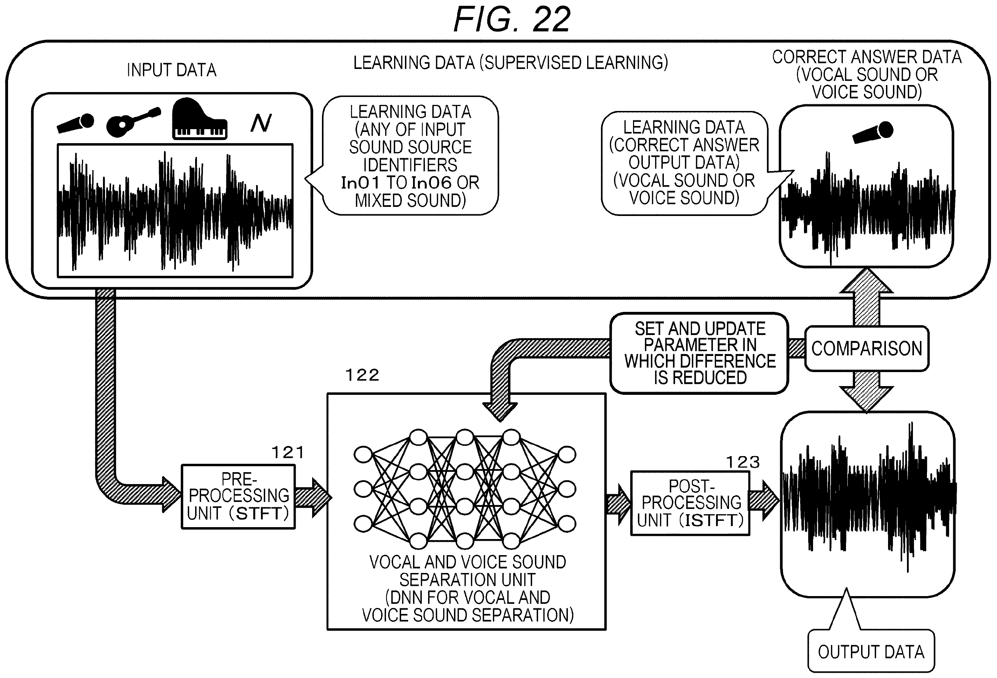

Referring to Fig. 22 and subsequent drawings, details of the processing of generating the following three types of learning models (DNN), that is,
(1) learning model (DNN) for vocal sound (singing sound) or voice sound (conversation sound) extraction,
(2) learning model (DNN) for guitar sound or piano sound extraction, and
(3) learning model (DNN) for noise sound extraction will be described.

Fig. 22 is a diagram for explaining learning processing for generating a vocal and voice sound separation unit (DNN for vocal and voice sound separation) 122 for extracting a vocal sound (singing sound) or a voice sound (conversation sound) corresponding to human voice from input data.

The learning processing illustrated in Fig. 22 is supervised learning processing.

That is, learning processing is performed using a data set of a large number of "input data" including mixed data of various sound source data and "correct answer data" that is extraction data of a vocal sound (singing sound) or a voice sound (conversation sound) included in each input data.

That is, learning processing using teacher data in which both a vocal sound (singing sound) and a voice sound (conversation sound) are set as correct answer data is executed.

In the supervised learning processing, as described above, correct answer data for input data is prepared in advance, the input data is input to the vocal and voice sound separation unit (DNN for vocal and voice sound separation) 122 via the pre-processing unit (STFT) 121, and a separation processing result in the vocal and voice sound separation unit (DNN for vocal and voice sound separation) 122 is output via the post-processing unit (ISTFT) 123 to obtain "output data".

The "output data" is compared with the "correct answer data", and processing of setting and updating the parameters of the neural network constituting the vocal and voice sound separation unit (DNN for vocal and voice sound separation) 122 is executed so that the difference between the two data becomes small.

For example, these data sets of a large number of different "(a) input data" of the learning data identifiers 00001 to nnnnn illustrated in Fig. 21 and "(b1) correct answer output data (vocal sound or voice sound)" are used.

A large number of different "(a) input data" from the learning data identifiers 00001 to nnnnn are sequentially input to the vocal and voice sound separation unit (DNN for vocal and voice sound separation) 122, and the parameters of the neural network constituting the vocal and voice sound separation unit (DNN for vocal and voice sound separation) 122 are sequentially updated so that the difference between the "output data" and the "(b1) correct answer output data (vocal sound or voice sound)" becomes small.

By repeating this processing, the separation performance of the vocal and voice sound separation unit (DNN for vocal and voice sound separation) 122 can be gradually improved.

When the separation performance at the preset allowable level is obtained, the learning processing can be ended.

By performing such learning processing, one neural network in the sound source separation processing execution unit 113 illustrated in Fig. 20, that is, the vocal and voice sound separation unit (DNN for vocal and voice sound separation) 122 can be generated.

The vocal and voice sound separation unit (DNN for vocal and voice sound separation) 122 generated by this learning processing is a neural network that extracts, from mixed audio data in which voices from various sound sources are mixed, audio data that is a sound of a frequency corresponding to the human voice and has the following features of sounds common to the vocal sound (singing sound) and the voice sound (conversation sound) described above.
(Common feature point 1) Sound accompanied by a person's utterance.
(Common feature point 2) Having vowel sound that can be identified.
(Common feature point 3) Having an identifiable consonant.
(Common feature point 4) Having respiratory sound from oral cavity.
(Common feature point 5) Having respiratory sound from the nose.
(Common feature point 6) Accompanied by a sound coming out from the nose at the time of vocalization.
(Common feature point 7) Accompanied by a sound reverberates from the head or chest when being uttered.

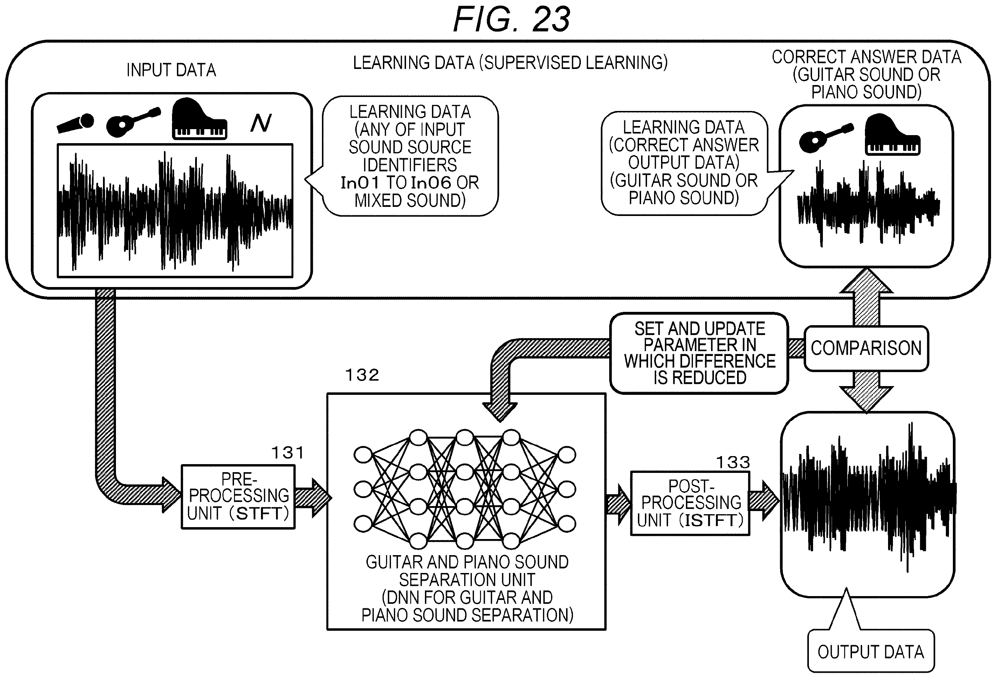

Fig. 23 is a diagram for explaining learning processing for generating the guitar and piano sound separation unit (DNN for guitar and piano sound separation) 132 in the sound source separation processing execution unit 113 illustrated in Fig. 20.

The learning processing illustrated in Fig. 23 is also supervised learning processing. Supervised learning processing is performed using a data set of a large number of "input data" including mixed data of various sound source data and "correct answer data" obtained by extracting only the guitar sound and the piano sound from each input data.

Also in this case, as illustrated in Fig. 21, these data sets of a large number of different "(a) input data" from the learning data identifiers 00001 to nnnnn and "(b2) correct answer output data (guitar sound or piano sound)" are used as the learning data.

A large number of different "(a) input data" from the learning data identifiers 00001 to nnnnn are sequentially input to the guitar and piano sound separation unit (DNN for guitar and piano sound separation) 132 via the pre-processing unit (STFT) 131 illustrated in Fig. 23, "output data" output from the post-processing unit (ISTFT) 133 is compared with "(b2) correct answer output data (guitar sound or piano sound)", and the parameters of the neural network constituting the guitar and piano sound separation unit (DNN for guitar and piano sound separation) 132 are sequentially updated so that the difference between the "output data" and the "correct answer data" becomes small.

By repeating this processing, the separation performance of the guitar and piano sound separation unit (DNN for guitar and piano sound separation) 132 can be gradually improved.

When the separation performance at the preset allowable level is obtained, the learning processing can be ended.

By performing such learning processing, the guitar and piano sound separation unit (DNN for guitar and piano sound separation) 132 in the sound source separation processing execution unit 113 illustrated in Fig. 20 can be generated.

The guitar and piano sound separation unit (DNN for guitar and piano sound separation) 132 generated by this learning processing is a neural network that extracts, from mixed audio data in which voices from various sound sources are mixed, audio data that is a sound of a frequency corresponding to the guitar sound and the piano sound and has the following features of the sound common to the guitar sound and the piano sound described above.
(Common feature point 1) Sound in which the same frequency sound continues for a certain period due to string vibration.
(Common feature point 2) Having a frequency characteristic having a double tone harmonic (harmonic) structure.
(Common feature point 3) Having a regular exponential decay (regular volume and change in tone) characteristic for each harmonic.
(Common feature point 4) Having linear sound characteristics.
(Common feature point 5) The pitch (fundamental frequency) is constant, and there is no time change (vibrato or the like).
(Common feature point 6) Having 12 scales (there is no pitch other than 12 scales).
(Common feature point 7) Having a chord (a plurality of pitches sound simultaneously).
(Common feature point 8) Sound having a constant sound.

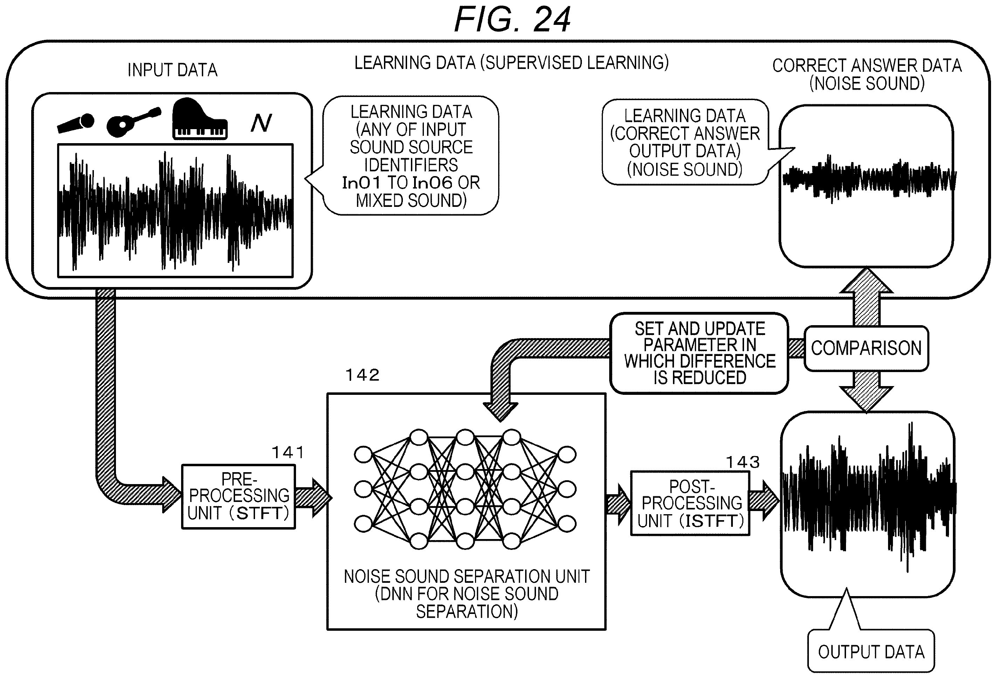

Fig. 24 is a diagram for explaining learning processing for generating the noise sound separation unit (DNN for noise sound separation) 142 in the sound source separation processing execution unit 113 illustrated in Fig. 20.

The learning processing illustrated in Fig. 23 is also supervised learning processing. Supervised learning processing is performed using data sets of a large number of "input data" including mixed data of various sound source data and "correct answer data" obtained by extracting only noise sound from each input data.

Also in this case, as illustrated in Fig. 21, a large number of different data sets "(a) input data" and "(b3) correct answer output data (noise sound)" from the learning data identifiers 00001 to nnnnn are used as the learning data.

That is, learning processing using teacher data in which both the guitar sound and the piano sound are set as correct answer data is performed.

A large number of different "(a) input data" from the learning data identifiers 00001 to nnnnn are sequentially input to the noise sound separation unit (DNN for noise sound separation) 142 via the pre-processing unit (STFT) 141 illustrated in Fig. 24, "output data" output from the post-processing unit (ISTFT) 143 is compared with "correct answer data", and the parameters of the neural network constituting the noise sound separation unit (DNN for noise sound separation) 142 are sequentially updated so that the difference between the "output data" and the "correct answer data" becomes small.

By repeating this processing, the separation performance of the noise sound separation unit (DNN for noise sound separation) 142 can be gradually improved.

When the separation performance at the preset allowable level is obtained, the learning processing can be ended.

By performing such learning processing, the noise sound separation unit (DNN for noise sound separation) 142 in the sound source separation processing execution unit 113 illustrated in Fig. 20 can be generated.

In the information processing apparatus 100 of the present disclosure, it is sufficient to generate these three types of learning models (DNN), that is,
(1) learning model (DNN) for vocal sound (singing sound) or voice sound (conversation sound) extraction,
(2) learning model (DNN) for guitar sound or piano sound extraction, and
(3) learning model (DNN) for noise sound extraction,
and the cost of the learning processing is reduced.

Furthermore, as compared with a conventional configuration in which a neural network in units of sound sources, for example, a guitar sound separation learning model and a piano sound separation learning model are individual models, the configuration of the present disclosure reduces the data amount of the neural network and parameters, and can also reduce the memory amount required to store these data.

### [5. Sequence of Sound Source Separation Processing Executed by Information Processing Apparatus of Present Disclosure]

Next, a sequence of sound source separation processing executed by the information processing apparatus of the present disclosure will be described.

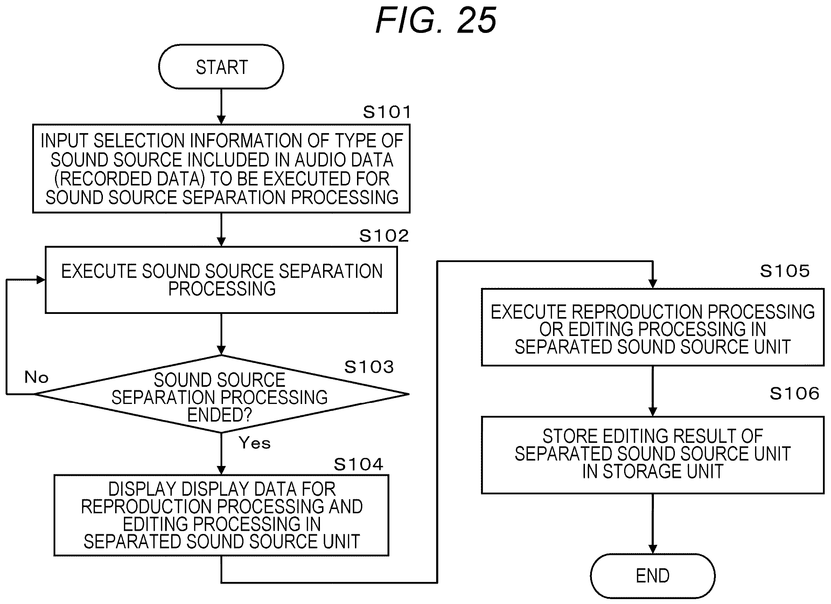

A sequence of the sound source separation processing executed by the information processing apparatus of the present disclosure will be described with reference to a flowchart illustrated in Fig. 25.

The flowchart illustrated in Fig. 25 is executed under the control of the control unit according to a program stored in the storage unit of the information processing apparatus 100 of the present disclosure. The control unit includes, for example, a processor such as a CPU having a program execution function, and controls processing according to the flow by program execution processing using the processor.

Hereinafter, processing of each step of the flow illustrated in Fig. 25 will be sequentially described.

Note that, before the start of the flow illustrated in Fig. 25, the audio data to be subjected to sound source separation has already been stored in the memory (storage unit) of the information processing apparatus 100.

The user starts sound source separation processing of the audio data recorded in the memory (storage unit) inside the information processing apparatus 100.

### (Step S101)

First, in step S101, the information processing apparatus 100 inputs selection information of the type of the sound source included in the audio data (recorded data) to be subjected to the sound source separation processing.

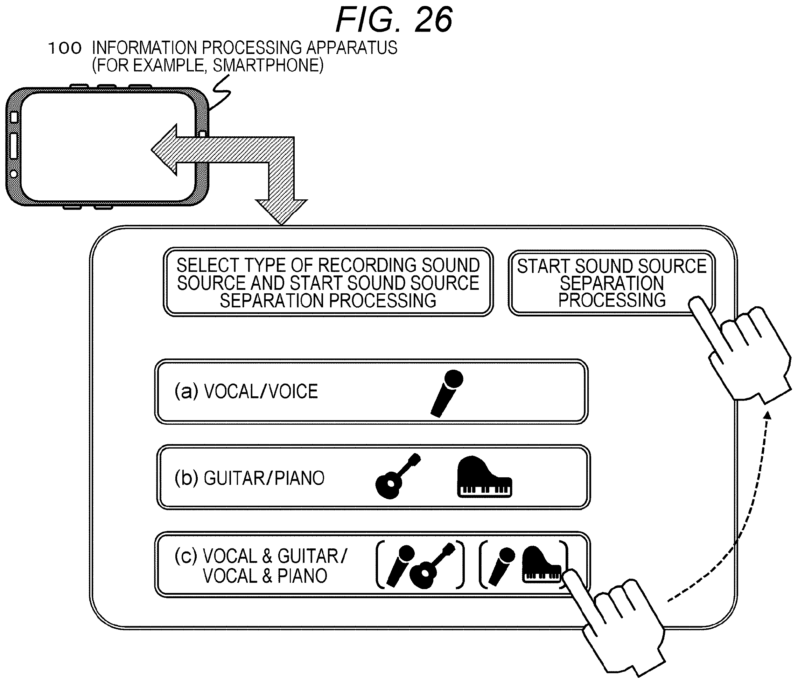

A specific example of the sound source type selection processing will be described with reference to Fig. 26.

For example, a user interface (UI) as illustrated in Fig. 26 is displayed on the display unit of the information processing apparatus 100, and the user uses the UI to instruct the start of the sound source separation processing.

Note that the input processing of the selection information of the sound source type may be performed at the start of the sound source separation processing, but may be performed, for example, when the user starts recording. In this case, the selection information of the sound source type is recorded as metadata for the recorded audio data stored in the storage unit.

Note that, here, a processing example of inputting the selection information of the sound source type included in the recorded audio data at the start of the sound source separation processing will be described.

As illustrated in Fig. 26, the UI displayed on the display unit of the information processing apparatus 100 is a UI that selects and designates the type of the sound source included in the audio data as the execution target of the sound source separation processing.
(a) Vocal/Voice
(b) Guitar/Piano
(c) Vocal and Guitar/Vocal and Piano

One of these three options is selected.
"(a) Vocal/Voice" is selected in a case where the sound source included in the recorded audio data is a singing sound (vocal) without a musical instrument or a conversation sound (voice).
"(b) Guitar/Piano" is selected in a case where the sound source included in the recorded audio data is a guitar sound without vocals or a piano sound.
"(c) Vocal and Guitar/Vocal and Piano" is selected in a case where the sound sources included in the recorded audio data are vocal and guitar sound, or vocal and piano sound.

As described above, the information processing apparatus 100 of the present disclosure does not distinguish between the vocal sound (singing sound) and the voice sound (conversation sound), and extracts these sounds as sounds of the same category using one learning model (DNN or the like).

Furthermore, the guitar sound and the piano sound are not distinguished, and are extracted as sounds of the same category using one learning model (DNN or the like).

That is, in the configuration of the present disclosure, each sound source separation processing is performed using the following three types of learning models (DNN).
(1) Learning model (DNN) for vocal sound (singing sound) or voice sound (conversation sound) extraction
(2) Learning model (DNN) for guitar sound or piano sound extraction
(3) Learning model (DNN) for noise sound extraction

In the UI illustrated in Fig. 26, in a case where a vocal sound (singing sound) or a voice sound (conversation sound) is included in a sound source serving as a sound source separation target, a configuration of options for not distinguishing the vocal sound (singing sound) and the voice sound (conversation sound) is adopted.

In addition, even in a case where a guitar sound or a piano sound is included in a sound source to be subjected to sound source separation, it is a configuration of options that does not distinguish between the guitar sound and the piano sound.

In a case where the user selects any one of the options (a) to (c) from the UI illustrated in Fig. 26 and touches "sound source separation processing start", the information processing apparatus 100 starts the sound source separation processing.

Note that the UI illustrated in Fig. 26 is an example, and a UI having another configuration may be displayed and used.

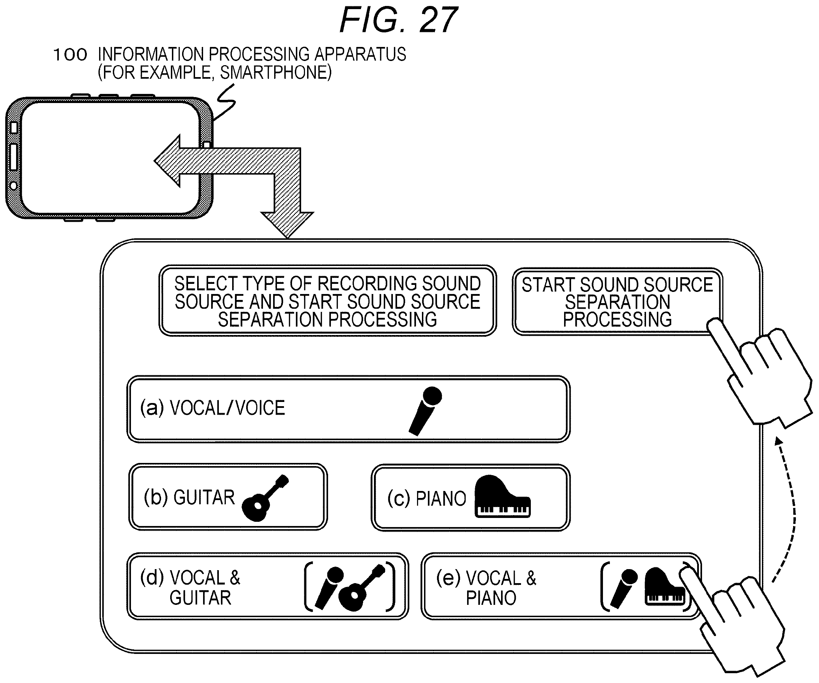

For example, the UI illustrated in Fig. 27 is a UI that can be selected from the following five sound source types as the type of the sound source included in the audio data as the execution target of the sound source separation processing.
(a) Vocal/Voice
(b) Guitar
(c) Piano
(d) Vocal and Guitar
(e) Vocal and Piano

The UI is configured to select one of these three types of options.

However, as described above, the information processing apparatus 100 of the present disclosure does not distinguish between the guitar sound and the piano sound, and extracts the guitar sound and the piano sound as sound sources of the same category (the same type) using one learning model (DNN or the like).

Therefore, the sound source separation processing executed in the information processing apparatus is the same processing using the same one learning model (DNN or the like) in both a case where "(b) Guitar" is selected and a case where "(c) Piano" is selected.

That is, the extraction processing of the guitar sound or the piano sound is executed using the guitar and piano sound separation unit (DNN for guitar and piano sound separation) 132 of the sound source separation processing execution unit 113 illustrated in Fig. 20.

The guitar and piano sound separation unit (DNN for guitar and piano sound separation) 132 executes extraction processing of a guitar sound or a piano sound using a learning model (DNN) for guitar sound or piano sound extraction.

Similarly, the information processing apparatus 100 of the present disclosure executes the same sound source separation processing in a case where "(d) Vocal and Guitar" is selected and in a case where "(e) Vocal and Piano" is selected.

That is, by using the vocal and voice sound separation unit (DNN for vocal and voice sound separation) 122 and the guitar and piano sound separation unit (DNN for guitar and piano sound separation) 132 of the sound source separation processing execution unit 113 illustrated in Fig. 20, the separation processing between the vocal sound (singing sound) and the guitar sound or the separation processing between the vocal sound (singing sound) and the piano sound is executed.

That is, the UI illustrated in Fig. 27 is a UI in which the guitar and the piano are set as different options in order to make it easy for the user to intuitively select the musical instrument actually used. The processing actually executed by the information processing apparatus 100 is the same regardless of whether the guitar is selected or the piano is selected.

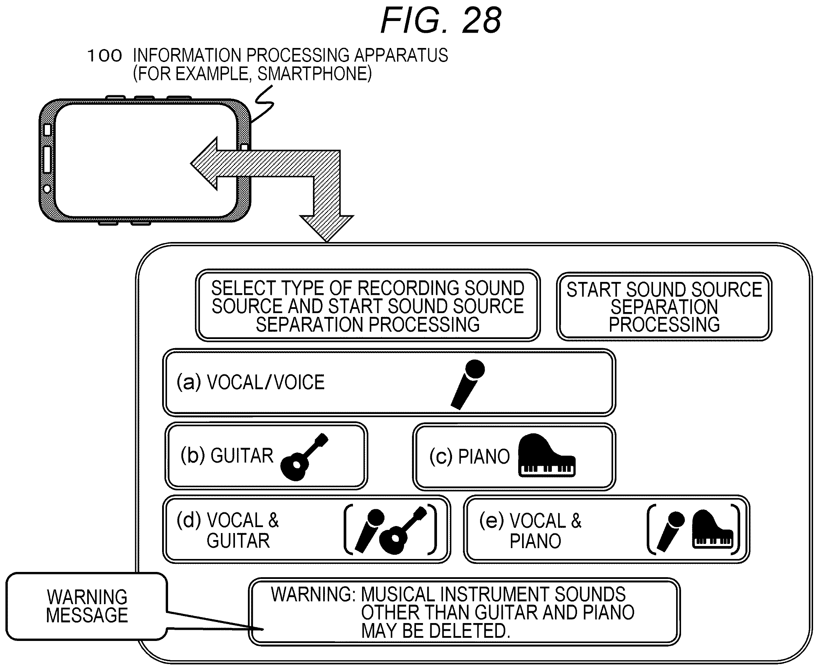

Further, a UI including a warning message as illustrated in Fig. 28 may be used.

The UI illustrated in Fig. 28 includes the following warning messages, that is,
"Warning: Musical instrument sounds other than guitar and piano may be deleted."

As described above with reference to Fig. 20, the information processing apparatus 100 of the present disclosure executes the sound source separation processing using the following three sound source separation units.
Vocal and voice sound separation unit (DNN for vocal and voice sound separation) 122
Guitar and piano sound separation unit (DNN for guitar and piano sound separation) 132
Noise sound separation unit (DNN for noise sound separation) 142

Therefore, there is a possibility that the musical instrument sounds other than the guitar and the piano are included in the noise sounds output by the above-described three separation units and are discarded by the system and cannot be used by the user.

In order to inform the user of this, a warning message as illustrated in Fig. 28 may be displayed on the UI.

Returning to the flowchart illustrated in Fig. 25, the description of the flowchart will be continued.

### (Step S102)

In step S101, when the information processing apparatus 100 inputs the selection information of the type of the sound source included in the audio data (recorded data) to be subjected to the sound source separation processing, the information processing apparatus 100 then starts the sound source separation processing in step S102.

Specifically, the information processing apparatus 100 executes the sound source separation processing in the sound source separation processing execution unit 113 having the configuration described with reference to Fig. 20.

Note that the processing mode of the sound source separation processing executed by the sound source separation processing execution unit 113 of the information processing apparatus 100 varies depending on the type of the sound source included in the audio data to be separated selected by the user.

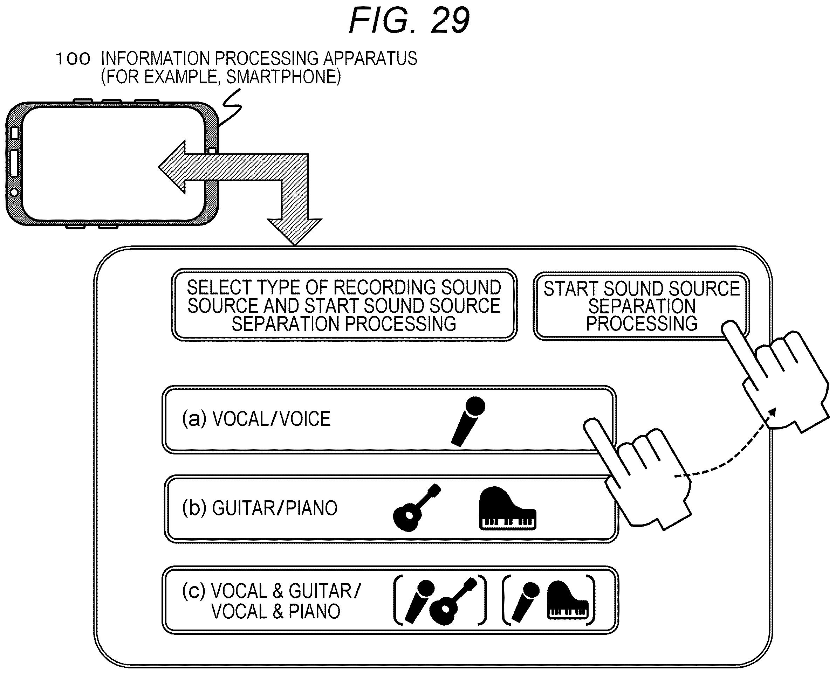

For example, as illustrated in Fig. 29, as the type of the sound source included in the audio data on which the sound source separation processing is to be executed by the user,
(a) Vocal/Voice
   processing in a case where this option (a) is selected will be described.

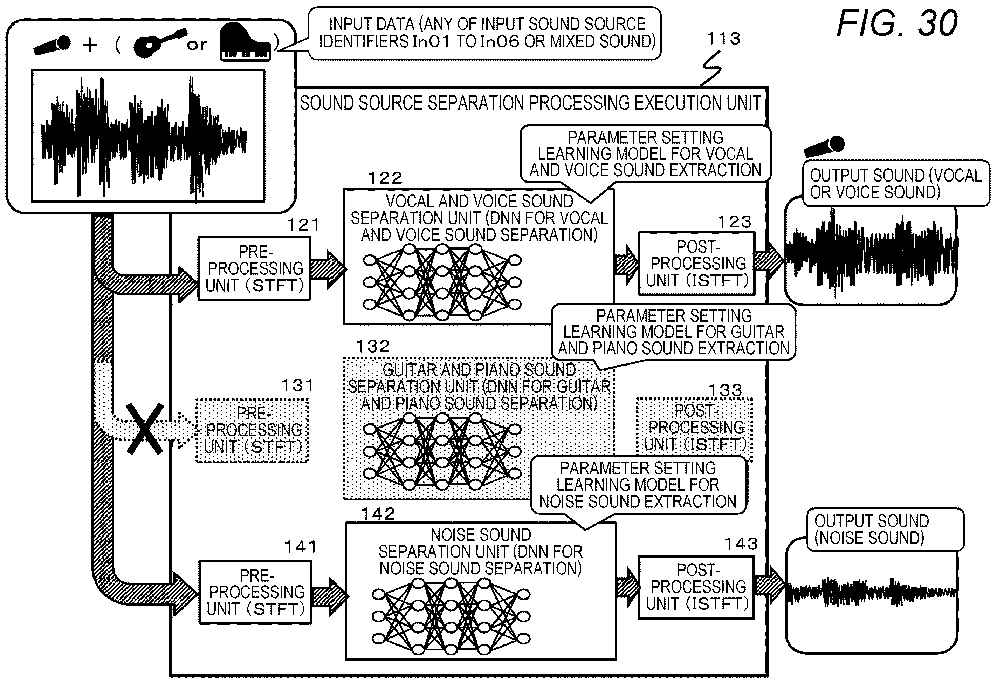

In this case, the processing mode of the sound source separation processing executed by the sound source separation processing execution unit 113 of the information processing apparatus 100 is the processing mode illustrated in Fig. 30.

In other words, as illustrated in Fig. 30, in the sound source separation processing execution unit 113,
a vocal and voice sound separation unit (DNN for vocal and voice sound separation) 122, and
a noise sound separation unit (DNN for noise sound separation) 142,
processing using these two sound source separation units is executed.

The guitar and piano sound separation unit (DNN for guitar and piano sound separation) 132 is not used.

The extraction processing of the vocal sound (singing sound) or the voice sound (conversation sound) included in the input data is executed by the pre-processing unit (STFT) 121, the vocal and voice sound separation unit (DNN for vocal and voice sound separation) 122, and the post-processing unit (ISTFT) 123 illustrated in the upper part.

Furthermore, the extraction processing of the noise sound included in the input data is executed by the configuration of the pre-processing unit (STFT) 141, the noise sound separation unit (DNN for noise sound separation) 142, and the post-processing unit (ISTFT) 143 illustrated in the lower part.

Note that the audio data file in units of sound sources generated by the sound source separation processing, that is,
an audio data file including a vocal sound (singing sound) or a voice sound (conversation sound), and
an audio data file including a noise sound,
these two audio data files in units of sound sources are stored in the storage unit 112 in the information processing apparatus 100.
Note that, in the processing example illustrated in Fig. 30, in the sound source separation processing execution unit 113,
a vocal and voice sound separation unit (DNN for vocal and voice sound separation) 122, and
a noise sound separation unit (DNN for noise sound separation) 142,
processing using only these two sound source separation units is executed, and
although the processing example in which the guitar and piano sound separation unit (DNN for guitar and piano sound separation) 132 is not used has been described, even in a case where "(a) Vocal/Voice" is selected in the UI illustrated in Fig. 29, the separating operation of the guitar and piano sound separation unit (DNN for guitar and piano sound separation) 132 may be operated without being stopped.

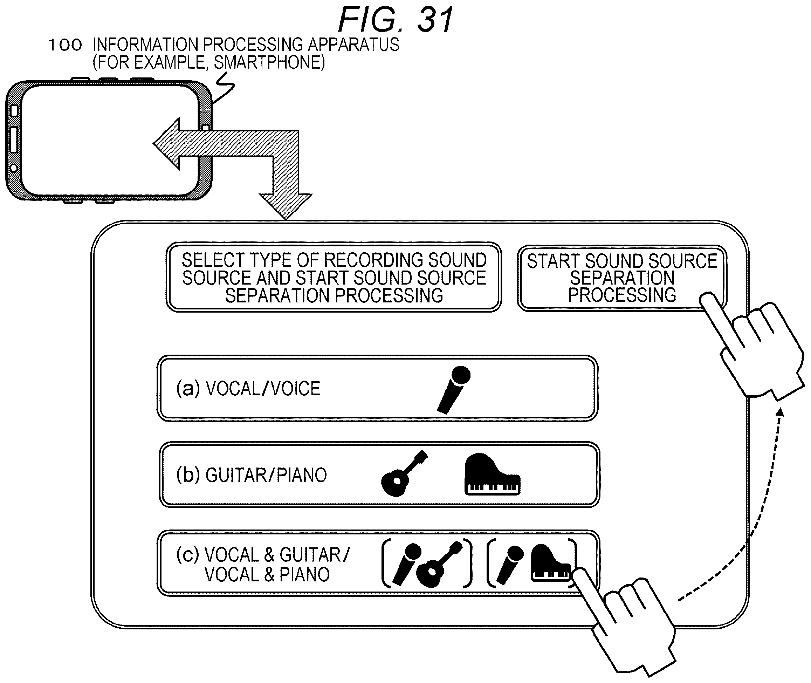

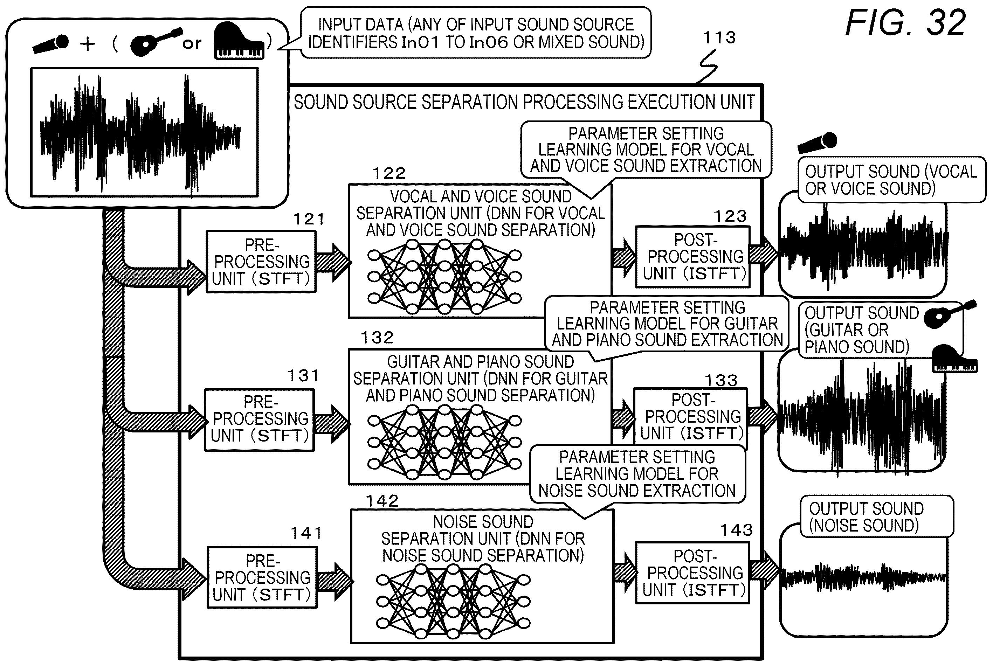

Next, a processing example in a case where the user selects a different option as the type of the sound source included in the audio data as the execution target of the sound source separation processing will be described with reference to Figs. 31 and 32.

For example, as illustrated in Fig. 31, as the type of the sound source included in the audio data on which the sound source separation processing is to be executed by the user,
(c) Vocal and Guitar/Vocal and Piano
processing in a case where this option (c) is selected will be described.

In this case, the processing mode of the sound source separation processing executed by the sound source separation processing execution unit 113 of the information processing apparatus 100 is the processing mode illustrated in Fig. 32.

In other words, as illustrated in Fig. 32, in the sound source separation processing execution unit 113,
a vocal and voice sound separation unit (DNN for vocal and voice sound separation) 122,
a guitar and piano sound separation unit (DNN for guitar and piano sound separation) 132, and
a noise sound separation unit (DNN for noise sound separation) 142,
processing using these three sound source separation units is executed.

The extraction processing of the vocal sound (singing sound) or the voice sound (conversation sound) included in the input data is executed by the pre-processing unit (STFT) 121, the vocal and voice sound separation unit (DNN for vocal and voice sound separation) 122, and the post-processing unit (ISTFT) 123 illustrated in the upper part.

In addition, the extraction processing of the guitar sound or the piano sound included in the input data is executed by the configurations of the pre-processing unit (STFT) 131, the guitar and piano sound separation unit (DNN for guitar and piano sound separation) 132, and the post-processing unit (ISTFT) 133 in the middle part.

Furthermore, the extraction processing of the noise sound included in the input data is executed by the configuration of the pre-processing unit (STFT) 141, the noise sound separation unit (DNN for noise sound separation) 142, and the post-processing unit (ISTFT) 143 illustrated in the lower part.

Note that the audio data file in units of sound sources generated by the sound source separation processing, that is,
an audio data file including a vocal sound (singing sound) or a voice sound (conversation sound),
an audio data file including a guitar sound or a piano sound, and
an audio data file including a noise sound,
these three audio data files in units of sound sources are stored in the storage unit 112 in the information processing apparatus 100.

The description of the flowchart illustrated in Fig. 25 will be continued.

### (Step S103)

In step S103, the information processing apparatus 100 determines whether or not the sound source separation processing started in step S102 has ended, and in a case where it is determined that the sound source separation processing has ended, the processing proceeds to step S104.

### (Step S104)

Next, in step S104, the information processing apparatus 100 displays, on the display unit, display data for reproduction processing or editing processing of the audio data in units of sound sources generated by the sound source separation processing executed in step S102.

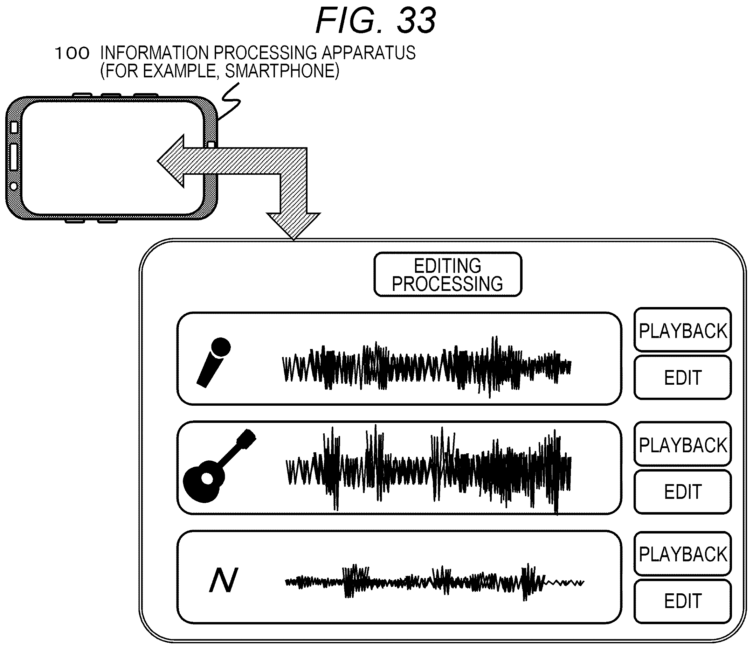

Fig. 33 illustrates a specific example of display data for reproduction processing or editing processing of audio data in units of sound sources.

The example illustrated in Fig. 33 is an example in which the audio data in units of sound sources generated by the sound source separation processing executed in step S102 is the audio data in units of these three types of sound sources:
a vocal sound (singing sound);
a guitar sound; and
a noise sound.

On the display unit 117 of the information processing apparatus 100, the audio data in units of these three types of sound sources are arranged and displayed side by side along the synchronized time axis.

Note that, in the display example illustrated in Fig. 33, the display example of the audio data in units of these three types of sound sources including the vocal sound (singing sound), the guitar sound, and the noise sound is illustrated. However, since the noise sound is less likely to be an object to be edited, the display may be omitted, and only the two types of audio data including the guitar sound and the noise sound may be displayed side by side.

### (Step S105)

In step S105, the user performs reproduction processing and editing processing of the audio data of each sound source unit using the display data for editing displayed in step S104.

In a case where the reproduction processing of the audio data of each sound source unit is performed, it is sufficient that the reproduction button set on the right side of the audio data of each sound source unit is touched.

Furthermore, in a case where the audio data of each sound source unit is edited, it is sufficient that an edit button set on the right side of the audio data of each sound source unit is touched. With this processing, a UI capable of executing various data editing processing such as specific editing processing of each sound source unit, for example, volume adjustment processing, pitch adjustment processing, or timing adjustment processing is displayed.

### (Step S106)

When the data editing processing of the sound source unit in step S105 is completed, the information processing apparatus 100 stores the data file of the edited sound source unit in the storage unit 106 in step S106, and ends the processing.

### [6. Configuration Example in Which Sound Source Separation Processing Is Executed in External Device]

Next, a configuration example in which the sound source separation processing is executed in the external device will be described.

In the above-described embodiment, for example, the configuration example in which the information processing apparatus 100 such as a smartphone performs the sound source separation processing by the sound source separation processing execution unit 113 configured inside the information processing apparatus 100 has been described.

That is, as described above with reference to Fig. 14, the audio data input by the user 1 via the microphone of the information processing apparatus 100 such as the smartphone is recorded in the storage unit 112 (corresponding to the memory (storage unit) 102 in Fig. 14) of the information processing apparatus 100 in Fig. 17, and the sound source separation processing execution unit 113 in the information processing apparatus 100 executes the sound source separation processing on the recorded audio data.

The sound source separation processing is not limited to be executed inside the information processing apparatus 100, and may be executed in an external device that can communicate with the information processing apparatus 100, for example, a data processing server.

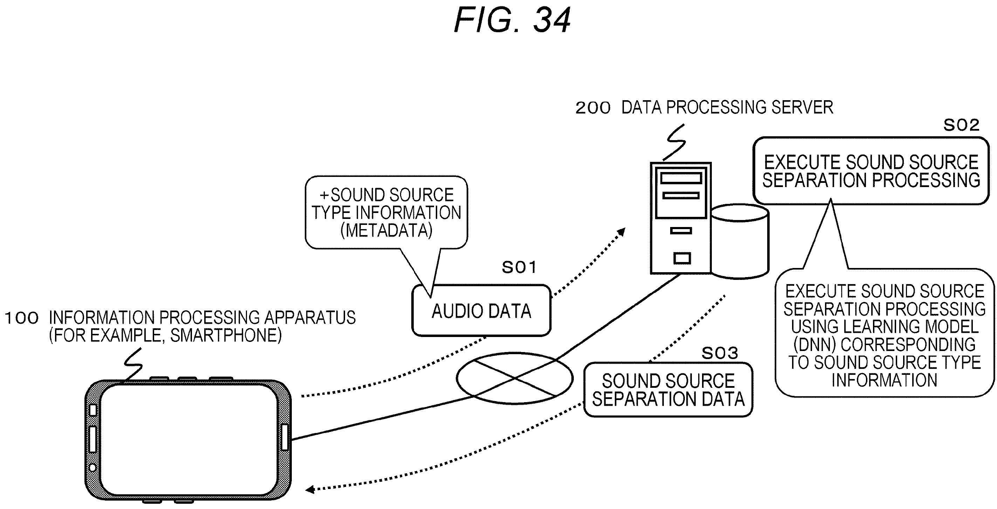

An example of a system that executes sound source separation processing using an external device will be described with reference to Fig. 34.

Fig. 34 illustrates an information processing apparatus 100 such as a smartphone used by the user and a data processing server 200 which is an external device communicable with the information processing apparatus 100.

In the system illustrated in Fig. 34, not the information processing apparatus 100 but the data processing server 200 executes the sound source separation processing.

The data processing server 200 includes a sound source separation processing execution unit similar to the sound source separation processing execution unit 113 described above with reference to Fig. 20.

The information processing apparatus 100 transmits the audio data stored in the storage unit inside the information processing apparatus 100 to the data processing server 200.

The audio data to be transmitted is, for example, data recorded in advance by the user of the information processing apparatus 100.

Note that, when transmitting the audio data to the data processing server 200, the information processing apparatus 100 adds information indicating the type of the sound source included in the audio data to be transmitted as metadata and transmits the audio data.

Note that, as the information indicating the type of the sound source included in the audio data, for example, information specified by the user using the UI described above with reference to Figs. 26 to 28 can be used.

The data processing server 200 receives the audio data and the metadata which is the information indicating the type of the sound source included in the audio data from the information processing apparatus 100.

The data processing server 200 executes sound source separation processing of the audio data on the basis of the metadata received from the information processing apparatus 100.

This sound source separation processing is processing similar to the processing described above with reference to Figs. 30 and 32.

The audio data in units of sound sources generated as a result of the sound source separation processing executed in the data processing server 200 is transmitted from the data processing server 200 to the information processing apparatus 100 and stored in the storage unit of the information processing apparatus 100.

Note that the noise data generated as a result of the sound source separation processing may be discarded on the data processing server 200 side without being transmitted to the information processing apparatus 100.

Thereafter, the information processing apparatus 100 can perform reproduction processing and editing processing of audio data in units of sound sources. That is, the UI described above with reference to Fig. 33 is displayed, and the reproduction processing and the editing processing of the audio data of the sound source unit can be performed.

As described above, the sound source separation processing may be executed not in the information processing apparatus 100 but in an external device that can communicate with the information processing apparatus 100, for example, a data processing server.

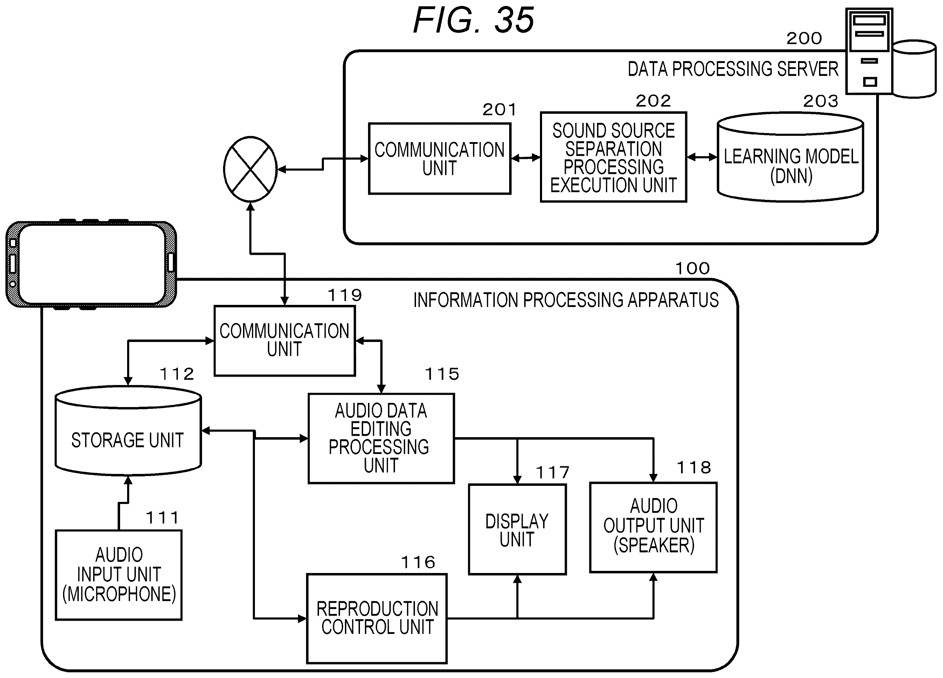

Next, a configuration of the information processing apparatus 100 and a configuration example of the data processing server 200 in a case where the sound source separation processing is executed in the data processing server 200 will be described with reference to Fig. 35.

As illustrated in Fig. 35, the information processing apparatus 100 including a smartphone or the like used by the user includes an audio input unit (microphone) 111, a storage unit 112, an audio data editing processing unit 115, a reproduction control unit 116, a display unit 117, an audio output unit (speaker) 118, and a communication unit 119.

The audio input unit (microphone) 111 is a microphone, and inputs the voice of the user or a musical instrument sound of a guitar or the like.

The storage unit 112 records audio data input via the audio input unit (microphone) 111.

The audio data editing processing unit 115 is, for example, a data processing unit that displays a UI as described above with reference to Fig. 33 and executes the audio data editing processing of each sound source unit according to an instruction of the user.

The audio data editing processing unit 115 reads the audio data file of the sound source unit separated in the data processing server 200 from the storage unit 112, displays the audio data information of the sound source unit as described with reference to Fig. 33 on the display unit 117, changes and edits the audio data of the sound source unit according to the user instruction, and stores the result in the storage unit 112.

The reproduction control unit 116 executes processing of reading and reproducing the audio data stored in the storage unit 112, for example, the audio data at the time of recording or the audio data file of the sound source unit separated in the processing execution unit 113 from the storage unit 112.

The display unit 117 displays, for example, the UI as described with reference to Figs. 26 to 28 and 33. Note that the display unit 117 is a touch panel type display unit, and has a configuration capable of performing various input processing and instructions by a user operation.

The audio output unit (speaker) 118 is, for example, a speaker that outputs audio data or the like reproduced by the processing of the reproduction control unit 116.

The communication unit 119 executes communication with an external device, for example, the data processing server 200.

Meanwhile, the data processing server 200 includes a communication unit 201, a sound source separation processing execution unit 202, and a learning model 203.

The communication unit 201 executes communication with the information processing apparatus 100 such as a smartphone, for example.

The sound source separation processing execution unit 202 inputs the audio data received from the information processing apparatus 100 and executes sound source separation processing of separating the audio data into data corresponding to each sound source included in the audio data.

Note that the audio data file in units of sound sources separated by the sound source separation processing execution unit 202 is transmitted to the information processing apparatus 100 via the communication unit 201.

The learning model (DNN) 203 is a learning model used for the sound source separation processing executed by the sound source separation processing execution unit 202, for example, a neural network such as a DNN.

The sound source separation processing execution unit 202 and the learning model (DNN) 203 in the data processing server 200 are similar to the configuration in a case where the sound source separation processing is executed in the information processing apparatus 100 described above. That is, the data processing server 200 includes a sound source separation processing execution unit similar to that described above with reference to Fig. 20 and the like.

Specifically, the configuration is similar to the configuration described above with reference to Fig. 20, and includes the following three sound source separation units.
(a) A vocal and voice sound separation unit (DNN for vocal and voice sound separation) 122 that executes extraction processing of a vocal sound (singing sound) or a voice sound (conversation sound) using a learning model (DNN) for vocal sound (singing sound) or voice sound (conversation sound) extraction
(b) A guitar and piano sound separation unit (DNN for guitar and piano sound separation) 132 that executes extraction processing of a guitar sound or a piano sound by using a learning model (DNN) for guitar sound or piano sound extraction
(3) A noise sound separation unit (DNN for noise sound separation) 142 that executes noise sound extraction processing using a learning model (DNN)) for noise sound extraction

In this manner, the vocal sound (singing sound) and the voice sound (conversation sound) are not distinguished from each other, and are separated as sounds (voices) of the same category (type).

Similarly, the guitar sound and the piano sound are not distinguished and are separated as sounds of the same category (musical instrument sounds).

The sound source separation processing execution unit 202 in the data processing server 200 is configured to execute such sound source separation processing.

### [7. Hardware Configuration Example of Information Processing Apparatus of Present Disclosure]

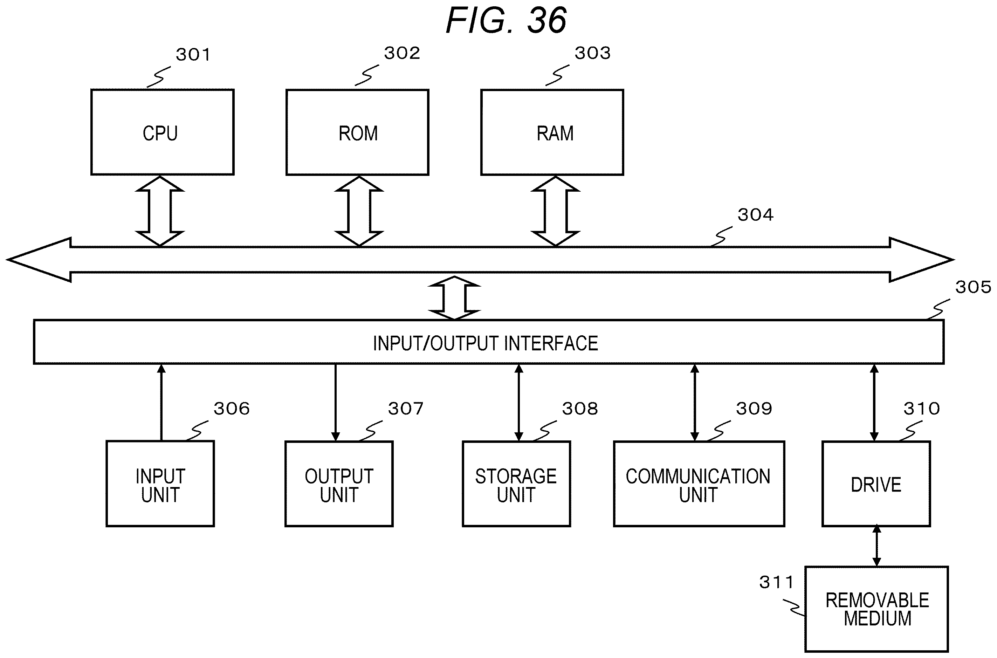

Next, a hardware configuration example of the information processing apparatus of the present disclosure will be described with reference to Fig. 36.

Each element of the hardware configuration illustrated in Fig. 36 will be described.

A central processing unit (CPU) 301 functions as a data processing unit that executes various processes according to a program stored in a read only memory (ROM) 302 or a storage unit 308. For example, processing according to the sequence described in the above-described embodiment is executed. A random access memory (RAM) 303 stores programs executed by the CPU 301, data, and the like. The CPU 301, the ROM 302, and the RAM 303 are mutually connected by a bus 304.

The CPU 301 is connected to an input/output interface 305 via the bus 304, and an input unit 306 including various sensors, a camera, a switch, a keyboard, a mouse, a microphone, and the like, and an output unit 307 including a display, a speaker, and the like are connected to the input/output interface 305.

The storage unit 308 connected to the input/output interface 305 includes, for example, a USB memory, an SD card, a hard disk, and the like, and stores programs executed by the CPU 301 and various data. The communication unit 309 functions as a transmission/reception unit for data communication via a network such as the Internet or a local area network, and communicates with an external apparatus.

A drive 310 connected to the input/output interface 305 drives a removable medium 311 such as a magnetic disk, an optical disk, a magneto-optical disk, or a semiconductor memory such as a memory card, and records or reads data.

### [8. Summary of Configuration of Present Disclosure]

Hereinabove, the examples of the present disclosure have been described in detail with reference to specific examples. However, it is obvious that those skilled in the art can make modifications and substitutions of the examples without departing from the gist of the present disclosure. That is, the present invention has been disclosed in the form of exemplification, and should not be interpreted in a limited manner. In order to determine the gist of the present disclosure, the claims should be taken into consideration.

Note that the technology disclosed in the present specification can have the following configurations.
(1) An information processing apparatus including a sound source separation processing execution unit that executes sound source separation processing, in which
   the sound source separation processing execution unit
   includes a configuration that executes sound source separation processing using a learning model, and
   executes processing of extracting a plurality of different types of musical instrument sounds using a same learning model.
(2) The information processing apparatus according to (1), in which the sound source separation processing execution unit is configured to
   execute processing of extracting a guitar sound and a piano sound using a same learning model.
(3) The information processing apparatus according to (1) or (2), in which the sound source separation processing execution unit is further configured to
   execute processing of extracting a vocal sound (singing sound) and a voice sound (conversation sound) using a same learning model.
(4) The information processing apparatus according to any one of (1) to (3), in which the sound source separation processing execution unit includes a configuration including three types of learning models (a) to (c) of:
   (a) a learning model that extracts a vocal sound (singing sound) and a voice sound (conversation sound);
   (b) a learning model that extracts a guitar sound and a piano sound; and
   (c) a learning model that extracts a noise sound.
(5) The information processing apparatus according to any one of (1) to (4), in which the learning model includes a learning model including a deep neural network (DNN) .
(6) The information processing apparatus according to any one of (1) to (5), in which the information processing apparatus includes
   a configuration in which a user interface (UI) including a sound source type option for selecting a sound source type included in audio data to be subjected to sound source separation is displayed on a display unit,
   before start of the sound source separation processing using the sound source separation processing unit, and
   the UI includes a UI in which a plurality of different types of musical instrument sounds is set as one sound source type option.
(7) The information processing apparatus according to (6), in which the information processing apparatus includes
   a configuration in which a user interface (UI) including a sound source type option for selecting a sound source type included in audio data to be recorded is displayed on a display unit when recording of the audio data to be subjected to sound source separation is started.
(8) The information processing apparatus according to (6) or (7), in which the UI includes
   a UI in which a guitar sound and a piano sound are set as one sound source type option.
(9) The information processing apparatus according to (8), in which the UI further includes
   a UI that sets a vocal sound (singing sound) and a voice sound (conversation sound) as one sound source type option.
(10) The information processing apparatus according to any one of (1) to (9), in which the sound source separation processing execution unit includes
   a configuration in which a guitar sound and a piano sound are extracted using a same learning model, and
   the learning model for extracting the guitar sound and the piano sound includes
   a learning model in which a parameter for extracting a sound having a feature of a sound common to a guitar sound and a piano sound is set.
(11) The information processing apparatus according to any one of (1) to (10), in which the sound source separation processing execution unit includes
   a configuration of extracting a vocal sound (singing sound) and a voice sound (conversation sound) using a same learning model, and
   the learning model for extracting the vocal sound (singing sound) and the voice sound (conversation sound) includes
   a learning model in which a parameter for extracting a sound having a feature of a sound common to a vocal sound (singing sound) and a voice sound (conversation sound) is set.
(12) The information processing apparatus according to any one of (1) to (11), in which the sound source separation processing execution unit includes
   a configuration including a pre-processing unit, a sound source separation unit using a learning model, and a post-processing unit.
(13) The information processing apparatus according to (12), in which the pre-processing unit includes
   a data processing unit that performs short-time Fourier trasform (STFT) on input audio data, and
   the post-processing unit includes
   a data processing unit that executes inverse short-time Fourier trasform (ISTFT) on an output from the sound source separation unit.
(14) The information processing apparatus according to any one of (1) to (13), in which the learning model includes
   a learning model generated by supervised learning processing.
(15) The information processing apparatus according to (14), in which the learning model generated by the supervised learning processing includes
   a learning model that extracts a guitar sound and a piano sound, and
   a learning model generated by learning processing using teacher data in which both a guitar sound and a piano sound are set as correct answer data.
(16) The information processing apparatus according to (14) or (15), in which the learning model generated by the supervised learning processing includes
   a learning model for extracting a vocal sound (singing sound) and a voice sound (conversation sound), and
   a learning model generated by learning processing using teacher data in which both a vocal sound (singing sound) and a voice sound (conversation sound) are set as correct answer data.
(17) A sound source separation processing method executed in an information processing apparatus, in which
   the information processing apparatus includes a sound source separation processing execution unit that executes sound source separation processing, and
   the sound source separation processing execution unit is configured to
   execute processing of extracting a plurality of different types of musical instrument sounds using a same learning model.
(18) A program that causes an information processing apparatus to execute sound source separation processing, in which
   the information processing apparatus includes a sound source separation processing execution unit that executes sound source separation processing, and
   the program causes the sound source separation processing execution unit to execute
   processing of extracting a plurality of different types of musical instrument sounds using a same learning model.

Furthermore, the series of processing described in the specification can be executed by hardware, software, or a combined configuration of both. In the case of executing processing by software, a program recording a processing sequence can be installed and executed in a memory in a computer incorporated in dedicated hardware, or the program can be installed and executed in a general-purpose computer capable of executing various types of processing. For example, the program can be recorded in advance in a recording medium. In addition to installation from the recording medium to the computer, the program can be received via a network such as a local area network (LAN) or the Internet and installed in a recording medium such as a built-in hard disk.

Note that the various types of processing described in the specification may be executed not only in time series according to the description but also in parallel or individually according to the processing capability of the apparatus that executes the processing or as necessary. Furthermore, in the present specification, a system is a logical set configuration of a plurality of apparatuses, and is not limited to a system in which apparatuses of respective configurations are in the same housing.

### INDUSTRIAL APPLICABILITY

As described above, according to the configuration of an example of the present disclosure, a configuration for executing the sound source separation processing for extracting a plurality of different musical instrument sounds and the like using one learning model is realized.

Specifically, for example, a sound source separation processing execution unit that executes sound source separation processing is included, and the sound source separation processing execution unit has a configuration that executes sound source separation processing using a learning model and executes processing of extracting a plurality of different types of musical instrument sounds using the same learning model. The sound source separation processing execution unit includes three types of learning models including (a) a learning model that extracts a vocal sound (singing sound) and a voice sound (conversation sound), (b) a learning model that extracts a guitar sound and a piano sound, and (c) a learning model that extracts a noise sound.

With these configurations, a configuration for executing sound source separation processing for extracting a plurality of different musical instrument sounds and the like using one learning model is realized.

### REFERENCE SIGNS LIST

1 User
20 Sound source separation processing execution unit
21, 31, 41, 51 Pre-processing unit
23, 33, 43, 53 Post-processing unit
22 Vocal sound separation unit (DNN for vocal sound separation)
32 Guitar sound separation unit (DNN for guitar sound separation)
42 Piano sound separation unit (DNN for piano sound separation)
53 Noise sound separation unit (DNN for noise sound separation)
100 Information processing apparatus
101 Microphone
102 Memory (storage unit)
111 Audio input unit (microphone)
112 Storage unit
113 Sound source separation processing execution unit
114 Learning model (DNN)
115 Audio data editing processing unit
116 Reproduction control unit
117 Display unit
118 Audio output unit (speaker)
119 Communication unit
121, 131, 141 Pre-processing unit
123, 133, 143 Post-processing unit
122 Vocal and voice sound separation unit (DNN for vocal and voice sound separation)
132 Guitar and piano sound separation unit (DNN for guitar and piano sound separation)
142 Noise sound separation unit (DNN for noise sound separation)
200 Data processing server
201 Communication unit
202 Sound source separation processing execution unit
203 Learning model (DNN)
301 CPU
302 ROM
303 RAM
304 Bus
305 Input/output interface
306 Input unit
307 Output unit
308 Storage unit
309 Communication unit
310 Drive
311 Removable medium

## Claims

1. An information processing apparatus comprising a sound source separation processing execution unit that executes sound source separation processing, wherein
the sound source separation processing execution unit
includes a configuration that executes sound source separation processing using a learning model, and
executes processing of extracting a plurality of different types of musical instrument sounds using a same learning model.

2. The information processing apparatus according to claim 1, wherein the sound source separation processing execution unit is configured to
execute processing of extracting a guitar sound and a piano sound using a same learning model.

3. The information processing apparatus according to claim 1, wherein the sound source separation processing execution unit is further configured to
execute processing of extracting a vocal sound (singing sound) and a voice sound (conversation sound) using a same learning model.

4. The information processing apparatus according to claim 1, wherein the sound source separation processing execution unit includes a configuration including three types of learning models (a) to (c) of:
(a) a learning model that extracts a vocal sound (singing sound) and a voice sound (conversation sound);
(b) a learning model that extracts a guitar sound and a piano sound; and
(c) a learning model that extracts a noise sound.

5. The information processing apparatus according to claim 1, wherein the learning model includes a learning model including a deep neural network (DNN).

6. The information processing apparatus according to claim 1, wherein the information processing apparatus includes
a configuration in which a user interface (UI) including a sound source type option for selecting a sound source type included in audio data to be subjected to sound source separation is displayed on a display unit,
before start of the sound source separation processing using the sound source separation processing unit, and
the UI includes a UI in which a plurality of different types of musical instrument sounds is set as one sound source type option.

7. The information processing apparatus according to claim 6, wherein the information processing apparatus includes
a configuration in which a user interface (UI) including a sound source type option for selecting a sound source type included in audio data to be recorded is displayed on a display unit when recording of the audio data to be subjected to sound source separation is started.

8. The information processing apparatus according to claim 6, wherein the UI includes
a UI in which a guitar sound and a piano sound are set as one sound source type option.

9. The information processing apparatus according to claim 8, wherein the UI further includes
a UI that sets a vocal sound (singing sound) and a voice sound (conversation sound) as one sound source type option.

10. The information processing apparatus according to claim 1, wherein the sound source separation processing execution unit includes
a configuration in which a guitar sound and a piano sound are extracted using a same learning model, and
the learning model for extracting the guitar sound and the piano sound includes
a learning model in which a parameter for extracting a sound having a feature of a sound common to a guitar sound and a piano sound is set.

11. The information processing apparatus according to claim 1, wherein the sound source separation processing execution unit includes
a configuration of extracting a vocal sound (singing sound) and a voice sound (conversation sound) using a same learning model, and
the learning model for extracting the vocal sound (singing sound) and the voice sound (conversation sound) includes
a learning model in which a parameter for extracting a sound having a feature of a sound common to a vocal sound (singing sound) and a voice sound (conversation sound) is set.

12. The information processing apparatus according to claim 1, wherein the sound source separation processing execution unit includes
a configuration including a pre-processing unit, a sound source separation unit using a learning model, and a post-processing unit.

13. The information processing apparatus according to claim 12, wherein the pre-processing unit includes
a data processing unit that performs short-time Fourier trasform (STFT) on input audio data, and
the post-processing unit includes
a data processing unit that executes inverse short-time Fourier trasform (ISTFT) on an output from the sound source separation unit.

14. The information processing apparatus according to claim 1, wherein the learning model includes
a learning model generated by supervised learning processing.

15. The information processing apparatus according to claim 14, wherein the learning model generated by the supervised learning processing includes
a learning model that extracts a guitar sound and a piano sound, and
a learning model generated by learning processing using teacher data in which both a guitar sound and a piano sound are set as correct answer data.

16. The information processing apparatus according to claim 14, wherein the learning model generated by the supervised learning processing includes
a learning model for extracting a vocal sound (singing sound) and a voice sound (conversation sound), and
a learning model generated by learning processing using teacher data in which both a vocal sound (singing sound) and a voice sound (conversation sound) are set as correct answer data.

17. A sound source separation processing method executed in an information processing apparatus, wherein
the information processing apparatus includes a sound source separation processing execution unit that executes sound source separation processing, and
the sound source separation processing execution unit is configured to
execute processing of extracting a plurality of different types of musical instrument sounds using a same learning model.

18. A program that causes an information processing apparatus to execute sound source separation processing, wherein
the information processing apparatus includes a sound source separation processing execution unit that executes sound source separation processing, and
the program causes the sound source separation processing execution unit to execute
processing of extracting a plurality of different types of musical instrument sounds using a same learning model.
